(19) Europäisches Patentamt
European Patent Office
Office européen des brevets

(11) **EP 4 635 256 B1**

(12) **EUROPÄISCHE PATENTSCHRIFT**

(45) Veröffentlichungstag und Bekanntmachung des Hinweises auf die Patenterteilung:
**26.11.2025 Patentblatt 2025/48**

(21) Anmeldenummer: **24794751.8**

(22) Anmeldetag: **22.10.2024**

(51) Internationale Patentklassifikation (IPC):
**H05B 6/10** *(2006.01)*      **H05B 6/36** *(2006.01)*
**H05B 6/44** *(2006.01)*

(52) Gemeinsame Patentklassifikation (CPC):
**H05B 6/104; H05B 6/365; H05B 6/44;** Y02P 10/25

(86) Internationale Anmeldenummer:
**PCT/EP2024/079789**

(87) Internationale Veröffentlichungsnummer:
**WO 2025/087888 (01.05.2025 Gazette 2025/18)**

(54) **INDUKTIONSERWÄRMUNGSVORRICHTUNG, PRODUKTIONSLINIE, VERWENDUNG EINER DERARTIGEN INDUKTIONSERWÄRMUNGSVORRICHTUNG UND VERWENDUNG EINER DERARTIGEN PRODUKTIONSLINIE**

INDUCTION HEATING DEVICE, PRODUCTION LINE, USE OF AN INDUCTION HEATING DEVICE OF THIS KIND, AND USE OF A PRODUCTION LINE OF THIS KIND

DISPOSITIF DE CHAUFFAGE PAR INDUCTION, LIGNE DE PRODUCTION, UTILISATION D'UN TEL DISPOSITIF DE CHAUFFAGE PAR INDUCTION, ET UTILISATION D'UNE TELLE LIGNE DE PRODUCTION

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **25.10.2023 DE 102023129462**

(43) Veröffentlichungstag der Anmeldung:
**22.10.2025 Patentblatt 2025/43**

(73) Patentinhaber: **SMS Group GmbH**
**41069 Mönchengladbach (DE)**

(72) Erfinder:
• **LENZ, Wolfgang**
**52076 Aachen (DE)**

• **DAUBE, Thomas**
**47279 Duisburg (DE)**
• **LANGEJÜRGEN, Markus**
**51688 Wipperfürth (DE)**
• **DAWIDOWICZ, Michael**
**42697 Solingen (DE)**

(74) Vertreter: **Richly & Ritschel Patentanwälte PartG mbB**
**Sattlerweg 20**
**51429 Bergisch Gladbach (DE)**

(56) Entgegenhaltungen:
EP-A1- 1 610 591      CH-A- 373 829
DE-A1- 1 803 129      US-A1- 2019 029 080

**Beschreibung**

Die vorliegende Erfindung betrifft eine Induktionserwärmungsvorrichtung zur Erwärmung eines Metallgutes und eine Produktionslinie zur Herstellung und/oder Verarbeitung eines Metallgutes.

Die Erfindung betrifft auch eine Verwendung einer solchen Induktionserwärmungsvorrichtung oder Produktionslinie.

Induktionserwärmungsvorrichtungen zur Erwärmung von Metallgütern, speziell im Zusammenhang mit Produktionslinien zur Herstellung und/oder Verarbeitung von Metallgütern, sind aus dem Stand der Technik grundsätzlich bekannt. Hierbei sind die bekannten Induktionserwärmungsvorrichtungen zum Erwärmen von in einer Förderrichtung geförderten Metallgütern mit gegenüber den Metallgütern feststehenden und/oder insbesondere vertikal zu einer Förderrichtung des Metallgutes bewegbaren Spulen ausgerüstet, wobei die Metallgüter in der Förderrichtung an den Spulen der Induktionserwärmungsvorrichtung vorbeigeführt werden.

Weiter können die bekannten Induktionserwärmungsvorrichtungen grundlegend darin unterschieden werden, ob die Spulen der Induktionserwärmungsvorrichtung eine Längsfeldinduktion oder eine Querfeldinduktion erzeugen können. Die magnetischen Feldlinien verlaufen bei Längsfeldinduktion im Wesentlichen in Längserstreckungsrichtung des Metallgutes. Bei Querfeldinduktion verlaufen die magnetischen Feldlinien in dem Metallgut im Wesentlichen in einer Quererstreckungsrichtung des Metallgutes, insbesondere in Dickenerstreckungsrichtung und/oder in Breitenerstreckungsrichtung des Metallgutes. Bei der Längsfeldinduktion wird eine gesteigerte Erwärmungshomogenität des Metallgutes erreicht wohingegen bei der Querfeldinduktion insbesondere in Kantenbereichen des Metallgutes eine Überhitzung oder Unterkühlung erfolgen kann.

Induktionserwärmungsvorrichtungen zur Erzeugung von Längsfeldinduktion weisen Spulen, insbesondere feststehende Spulen, auf, bei denen der vertikale Abstand zwischen den feststehenden Spulen und den Metallgütern in der Regel so ausgelegt ist, dass die Metallgüter, quer zu der Förderebene der jeweiligen Induktionserwärmungsvorrichtung gesehen, nicht mit den feststehenden Spulen kollidieren. Da eine Induktionserwärmungsvorrichtung für eine Vielzahl von Metallgütern mit unterschiedlichen Abmessungen verwendet werden soll, wird regelmäßig ein vertikaler Standardsicherheitsabstand der Spulen eingehalten, um ungewollte Beschädigungen der Spulen zu vermeiden. Jedoch hat dieser vorgesehene, meist größtmögliche, vertikale Standardsicherheitsabstand zur Folge, dass der elektrische Wirkungsgrad der jeweiligen Induktionserwärmungsvorrichtung erheblich herabgesetzt ist. Eine derartige gattungsgemäße Induktionserwärmungsvorrichtung ist beispielsweise aus der US 2019/029080 A1 bekannt.

Der vorliegenden Erfindung liegt die Aufgabe zugrunde, eine Induktionserwärmungsvorrichtung bereitzustellen, die bei der induktiven Erwärmung von Metallgütern einen hohen elektrischen Wirkungsgrad zwischen den Spulen und den Metallgütern und gleichzeitig eine gesteigerte Erwärmungshomogenität der Metallgüter aufweist.

Diese der vorliegenden Erfindung zugrundeliegende Aufgabe wird durch eine Induktionserwärmungsvorrichtung mit den Merkmalen von Anspruch 1, durch eine Produktionslinie mit den Merkmalen nach Anspruch 14, sowie eine Verwendung nach Anspruch 15 der vorliegenden Erfindung gelöst. Vorteilhafte Ausgestaltungen der Induktionserwärmungsvorrichtung sind in den abhängigen Ansprüchen beschrieben.

Im Genaueren wird die der vorliegenden Erfindung zugrundeliegende Aufgabe gelöst durch eine Induktionserwärmungsvorrichtung zur Erwärmung eines in eine Förderrichtung geförderten Metallgutes, wobei die Induktionserwärmungsvorrichtung zumindest einen Induktor mit zumindest einer ersten Spule und zumindest einer zweiten Spule aufweist. Die erste Spule und die zweite Spule sind in einer Abstandsrichtung voneinander beabstandet angeordnet und begrenzen einen Abstandsraum zumindest teilweise, sodass ein in der Förderrichtung gefördertes Metallgut zwischen der ersten Spule und der zweiten Spule durch den Abstandsraum gefördert wird. Die Induktionserwärmungsvorrichtung weist weiterhin eine Energieversorgungseinrichtung auf, die mit der ersten Spule und der zweiten Spule elektrisch verbunden ist, wobei die Energieversorgungseinrichtung dazu eingerichtet ist, die erste Spule und die zweite Spule mit Wechselstrom und/oder Wechselspannung zu versorgen, sodass eine Eindringtiefe $\delta$ von stromtragenden Schichten des geförderten Metallgutes kleiner oder gleich 0,7 Mal einer Dickenerstreckung des geförderten Metallgutes ist, wobei die zumindest zwei ersten Leiterprofile der ersten Spule einen ersten Polabstand von kleiner oder gleich 4 Mal einer Erstreckung eines Luftspaltes d zueinander aufweisen

Die Stromdichte eines von den magnetischen Wechselfeldern der ersten und zweiten Spule in einem durch den Abstandsraum zwischen der ersten und zweiten Spule geförderten Metallgut induzierten Stromes fällt ausgehend von der jeweiligen Oberfläche des Metallgutes über eine Dickenerstreckung des Metallgutes ab. Die Eindringtiefe $\delta$ von stromtragenden Schichten ist ausgehend von der Oberfläche des Metallgutes definiert als diejenige Eindringtiefe, bei welcher die Stromdichte des induzierten Stromes auf den e-ten Teil der Stromdichte des induzierten Stromes an der Oberfläche des Metallgutes abgenommen hat, wobei e die Eulersche Zahl ist. Die Eindringtiefe $\delta$ bestimmt sich nach der nachfolgenden Formel (1):

$$(1) \qquad \delta = \sqrt{\frac{\rho}{\pi * f * \mu_0 * \mu_r}}$$

wobei

$\rho$ = spezifischer elektrischer Widerstand, in $\Omega$m,

$\pi$ = Kreiszahl,

$\mu_0$ = magnetische Feldkonstante, in N/A$^2$,

$\mu_r$ = relative Permeabilität, dimensionslos, und

f = Frequenz, in 1/s.

Die Eindringtiefe $\delta$ steigt mit sinkender Frequenz des induzierten Stromes. Folglich sinkt die Stromdichte des induzierten Stromes ausgehend von der Oberfläche des Metallgutes mit sinkender Frequenz des induzierten Stromes langsamer über die Dickenerstreckung des Metallgutes ab. Dadurch werden ausgehend von der Oberfläche des Metallgutes gesehen, tiefer liegende Schichten des Metallgutes ebenfalls erwärmt, sodass eine gesteigerte Erwärmungshomogenität entlang der Dickenerstreckung des Metallgutes erreicht wird.

Gemäß Formel (1) ist ersichtlich, dass die Eindringtiefe $\delta$ von stromtragenden Schichten des geförderten Metallgutes von der Frequenz der durch die erste Spule und durch die zweite Spule fließenden Wechselströme sowie von dem Material des geförderten Metallgutes durch die relative Permeabilität $\mu_r$ abhängt. Eine Energieversorgungseinrichtung, die dazu eingerichtet ist, die erste Spule und die zweite Spule mit Wechselstrom- und Wechselspannung zu versorgen, sodass eine definierte Eindringtiefe $\delta$ von stromtragenden Schichten in dem geförderten Metallgut erreicht wird, ist folglich dazu eingerichtet, die erste Spule und die zweite Spule mit Wechselstrom und Wechselspannung geeigneter Frequenz zu versorgen. Mit der bekannten relativen Permeabilität $\mu_r$ des geförderten Metallgutes kann demnach gemäß Formel (1) die Eindringtiefe $\delta$ eingestellt werden.

Die Energieversorgungseinrichtung kann dazu eingerichtet sein, die erste Spule und die zweite Spule mit Wechselstrom und/oder Wechselspannung zu versorgen, sodass die Eindringtiefe $\delta$ von stromtragenden Schichten des geförderten Metallgutes $\leq 0{,}6$ Mal, $\leq 0{,}5$ Mal, $\leq 0{,}45$ Mal, $\leq 0{,}4$ Mal, $\leq 0{,}35$ Mal oder $\leq 0{,}3$ Mal der Dickenerstreckung des geförderten Metallgutes ist.

Es konnte gezeigt werden, dass eine derart ausgebildete Induktionserwärmungsvorrichtung den Vorteil aufweist, dass bei der induktiven Erwärmung des Metallgutes ein hoher elektrischer Wirkungsgrad zwischen den Spulen und dem Metallgut und dabei gleichzeitig eine gesteigerte Erwärmungshomogenität des Metallgutes, insbesondere eine gesteigerte Erwärmungshomogenität in der Dickenerstreckung des Metallgutes, erreicht wird.

Nach einer bevorzugten Ausführungsform kann die Energieversorgungseinrichtung dazu eingerichtet sein, die erste Spule und die zweite Spule mit Wechselstrom und/oder Wechselspannung zu versorgen, sodass die Eindringtiefe $\delta$ von stromtragenden Schichten des geförderten Metallgutes in einem Bereich von $\leq 0{,}6$ Mal und $\geq 0{,}3$ Mal, $\leq 0{,}5$ Mal und $\geq 0{,}3$ Mal, $\leq 0{,}6$ Mal und $\geq 0{,}4$ Mal, $\leq 0{,}5$ Mal und $\geq 0{,}4$ Mal, $\leq 0{,}45$ Mal und $\geq 0{,}3$ Mal, oder $\leq 0{,}4$ Mal und $\geq 0{,}3$ Mal der Dickenerstreckung des Metallgutes liegt. Nach einer besonders bevorzugten Ausführungsform kann die Energieversorgungseinrichtung dazu eingerichtet sein, die erste Spule und die zweite Spule mit Wechselstrom und/oder Wechselspannung zu versorgen, sodass die Eindringtiefe $\delta$ von stromtragenden Schichten des geförderten Metallgutes in einem Bereich von $\leq 0{,}45$ Mal und $\geq 0{,}4$ Mal der Dickenerstreckung des Metallgutes liegt.

Es konnte gezeigt werden, dass eine derart ausgebildete Induktionserwärmungsvorrichtung den Vorteil aufweist, dass bei der induktiven Erwärmung des Metallgutes ein nochmals erhöhter elektrischer Wirkungsgrad zwischen den Spulen und dem Metallgut und dabei gleichzeitig eine nochmals gesteigerte Erwärmungshomogenität des Metallgutes, insbesondere eine nochmals gesteigerte Erwärmungshomogenität in der Dickenerstreckung des Metallgutes, erreicht wird.

Nach einer besonders bevorzugten Ausführungsform kann die Energieversorgungseinrichtung dazu eingerichtet sein, die erste Spule und die zweite Spule mit Wechselstrom und/oder Wechselspannung zu versorgen, sodass die Eindringtiefe $\delta$ von stromtragenden Schichten des geförderten Metallgutes gleich $0{,}45$ Mal der Dickenerstreckung des geförderten Metallgutes ist.

Es konnte gezeigt werden, dass derart ausgebildete Induktionserwärmungsvorrichtung den Vorteil aufweist, dass bei der induktiven Erwärmung des Metallgutes ein besonders hoher elektrischer Wirkungsgrad zwischen den Spulen und dem Metallgut und dabei gleichzeitig eine besonders gesteigerte Erwärmungshomogenität des Metallgutes, insbesondere eine besonders gesteigerte Erwärmungshomogenität in der Dickenerstreckung des Metallgutes, erreicht wird.

Der elektrische Wirkungsgrad zwischen den Spulen und dem Metallgut bestimmt sich aus der in dem Metallgut umgesetzten Leistung und der Verlustleistung der Spulen nach nachfolgender Formel (2) :

$$(2) \qquad \eta = \frac{P_{Metallgut}}{P_{Metallgut} + P_{Spule}}$$

wobei

$\rho$ = elektrischer Wirkungsgrad zwischen Spule und Metallgut,

$P_{Metallgut}$ = im Metallgut umgesetzte Leistung,

$P_{Spule}$ = Verlustleistung der Spule.

Eine Energieversorgungseinrichtung wird im Sinne der Erfindung als eine Einrichtung verstanden, welche dazu eingerichtet ist, elektrische Energie für den Betrieb zumindest einer Spule bereitzustellen, insbesondere elektrische Energie mit elektrischem Strom geeigneter Stromstärke, geeigneter Spannung und/oder geeigneter Frequenz. Die vorliegende Energieversorgungsvorrichtung kann dazu ausgebildet sein, elektrische Energie für eine Mehrzahl von Spulen, insbesondere für zumindest zwei Spulen, bevorzugt für drei, vier, fünf, sechs oder mehr Spulen bereitzustellen. Die Energieversorgungseinrichtung kann zumindest einen Stromrichter, insbesondere einen Wechselrichter, aufweisen oder als dieser ausgebildet sein.

Das Metallgut kann als im Wesentlichen flächiges Werkstück ausgebildet sein. Das Metallgut kann als Metallbramme oder als Metallband oder als Formplatine ausgebildet sein. Eine Formplatine kann ein beliebiges Halbzeug zur Herstellung eines metallischen Gutes sein, insbesondere zur Herstellung von metallischen Formblechen wie beispielsweise Karosseriebauteile für Kraftfahrzeuge. Alternativ kann das Metallgut bereits ein fertig geformtes Karosseriebauteil für Kraftfahrzeuge sein, beispielsweise Karosserieblechteile der A-Säule oder β-Säule eines Kraftfahrzeugs.

Ein im Wesentlichen flächiges Werkstück im Rahmen der Erfindung weist eine Dickenerstreckung auf, die wesentlich kleiner ist, als eine Breitenerstreckung und eine Längenerstreckung.

Die Längenerstreckung des Metallgutes ist die Erstreckung des Metallgutes in Richtung der Förderrichtung.

Die Dickenerstreckung des Metallgutes ist die Erstreckung des Metallgutes in der Abstandsrichtung.

Eine Querrichtung verläuft senkrecht zur Förderrichtung und zur Abstandsrichtung. Mit anderen Worten bilden die Förderrichtung, die Abstandsrichtung und die Querrichtung ein orthogonales Koordinatensystem.

Die Breitenerstreckung des Metallgutes ist die Erstreckung des Metallgutes in der Querrichtung.

Die Förderrichtung und die Querrichtung spannen eine Förderebene auf. Eine von der Längenerstreckung und der Breitenerstreckung des Metallgutes aufgespannte Ebene ist parallel zu der Förderebene ausgerichtet. Vorzugsweise liegt die Förderebene bezüglich der Dickenerstreckung des Metallgutes symmetrisch in der Mitte des Metallgutes.

In der Regel ist die Förderrichtung horizontal verlaufend ausgerichtet. Insofern ist auch die Querrichtung horizontal verlaufend und orthogonal zur Förderrichtung verlaufend ausgerichtet, sodass die Förderebene horizontal verlaufend ausgerichtet ist. Die Abstandsrichtung ist insofern vertikal verlaufend ausgerichtet und orthogonal zur Förderrichtung und zur Abstandsrichtung verlaufend ausgerichtet.

Die Förderrichtung kann vertikal verlaufend ausgerichtet sein. Insofern ist die Querrichtung horizontal verlaufend und orthogonal zur Förderrichtung verlaufend ausgerichtet, sodass die Förderebene vertikal verlaufend ausgerichtet ist. Die Abstandsrichtung ist insofern horizontal verlaufend ausgerichtet und orthogonal zur Förderrichtung und zur Abstandsrichtung verlaufend ausgerichtet.

Das Metallgut weist eine erste Seite und eine der ersten Seite gegenüberliegende zweite Seite auf. Die Abstandsrichtung ist orthogonal zur ersten Seite und zur zweiten Seite des Metallgutes verlaufend ausgerichtet.

In dem Fall, in dem die Förderrichtung horizontal verlaufend ausgerichtet ist, kann die erste Seite des Metallgutes als Oberseite und die zweite Seite des Metallgutes als Unterseite des Metallgutes bezeichnet werden. Die erste Spule kann oberhalb des geförderten Metallgutes, insbesondere der Oberseite des Metallgutes gegenüberliegend angeordnet sein. Die zweite Spule kann unterhalb des geförderten Metallgutes, insbesondere der Unterseite des Metallgutes gegenüberliegend, angeordnet sein. Die erste Spule kann auch als obere Spule und die zweite Spule als untere Spule bezeichnet werden.

Das Metallgut kann auf einer Förderstrecke in Förderrichtung gefördert werden. Die Förderstrecke kann als Förderband ausgebildet sein.

Die erste Spule und/oder die zweite Spule können in der Förderrichtung und/oder in der Abstandsrichtung und/oder in der Querrichtung beweglich gelagert sein.

Die erste Spule und die zweite Spule können in Richtung der Förderrichtung an der gleichen Position angeordnet sein, sodass sich die erste Spule und die zweite Spule in der Abstandsrichtung derart gegenüberliegen, dass ein in Richtung der Förderrichtung gefördertes Metallgut sandwichartig zwischen der ersten Spule und der zweiten Spule hindurch gefördert werden kann.

Die erste Spule und die zweite Spule können in Richtung der Förderrichtung und/oder in Richtung der Querrichtung an der gleichen Position angeordnet sein, sodass sich die Spulen im Wesentlichen deckungsgleich bezüglich der Förderebene gegenüberliegen.

Die erste Spule und die zweite Spule können im Wesentlich die gleiche Form aufweisen.

Die Induktionserwärmungsvorrichtung ist vorzugsweise derart ausgebildet, dass die erste Spule einen ersten Abstand in der Abstandsrichtung zu einer ersten Seite des geförderten Metallgutes von kleiner oder gleich 150 mm aufweist und/oder dass die zweite Spule einen zweiten Abstand in der Abstandsrichtung zu einer zweiten Seite des geförderten Metallgutes von kleiner oder gleich 150 mm aufweist.

Eine derart ausgebildete Induktionserwärmungsvorrichtung weist den Vorteil auf, dass bei der induktiven Erwärmung des Metallgutes ein hoher elektrischer Wirkungsgrad zwischen den Spulen und dem Metallgut erreicht wird. Je geringer der Abstand einer Spule in Abstandsrichtung zu dem Metallgut, desto höher der elektrische Wirkungsgrad zwischen der Spule und dem Metallgut aufgrund verringerter Streufeldverluste und einer verbesserten Einkopplung des von der Spule erzeugten Magnetfeldes in das Metallgut.

Die erste Seite und die zweite Seite des Metallgutes sind vorzugsweise einander gegenüberliegende Seiten des Metallgutes. Die erste Seite und die zweite Seite des Metallgutes können zumindest teilweise parallel, vorzugsweise im Wesentlichen parallel, zur Förderebene ausgerichtet sein. Die erste Seite und die zweite Seite begrenzen das Metallgut in der Dickenerstreckung des Metallgutes. Bei einer horizontal verlaufenden Förderrichtung des Metallgutes ist die erste Seite die Oberseite des Metallgutes und die zweite Seite die Unterseite des Metallgutes. Die Unterseite des Metallgutes ist insbesondere dem Boden zugewandt. Bei einem als Metallbramme oder Metallband ausgebildeten Metallgut liegt die erste Seite in einer Ebene parallel zur Förderebene und begrenzt das Metallgut in einer Richtung der Dickenerstreckung des Metallgutes. Die zweite Seite des Metallgutes liegt der ersten Seite gegenüber in einer weiteren Ebene parallel zur Förderebene und begrenzt das Metallgut in entgegengesetzter Richtung der Dickenerstreckung des Metallgutes.

Die erste Spule kann einen ersten Abstand in der Abstandsrichtung zur ersten Seite des geförderten Metallgutes von ≤ 100 mm, ≤ 75 mm, ≤ 50 mm, ≤ 40 mm, ≤ 25 mm, ≤ 20 mm, ≤ 15 mm oder ≤ 10 mm aufweisen.

Die erste Spule kann einen ersten Abstand in der Abstandsrichtung zur ersten Seite des geförderten Metallgutes von ≤ 100 mm und ≥ 10 mm, ≤ 75 mm und ≥ 15 mm, ≤ 50 mm und ≥ 20 mm oder ≤ 40 mm und ≥ 25 mm aufweisen.

Die zweite Spule kann einen zweiten Abstand in der Abstandsrichtung zur zweiten Seite des geförderten Metallgutes von ≤ 100 mm, ≤ 75 mm, ≤ 50 mm, ≤ 40 mm, ≤ 25 mm, ≤ 20 mm, ≤ 15 mm oder ≤ 10 mm aufweisen.

Die zweite Spule kann einen zweiten Abstand in der Abstandsrichtung zur zweiten Seite des geförderten Metallgutes von ≤ 100 mm und ≥ 10 mm, ≤ 75 mm und ≥ 15 mm, ≤ 50 mm und ≥ 20 mm oder ≤ 40 mm und ≥ 25 mm aufweisen.

Der erste Abstand der ersten Spule zu der ersten Seite des geförderten Metallgutes kann dem zweiten Abstand der zweiten Spule zur zweiten, der ersten Seite gegenüberliegenden, Seite des Metallgutes entsprechen. Mit anderen Worten können der erste Abstand und der zweite Abstand den gleichen betraglichen Wert aufweisen.

Die Induktionserwärmungsvorrichtung ist vorzugsweise derart ausgebildet, dass die erste Spule zumindest eine Windung aufweist, die durch zumindest zwei erste über einen ersten Verbindungssteg verbundene Leiterprofile gebildet wird, wobei der erste Verbindungssteg der ersten Spule einen ersten Kantenabstand zu einer ersten äußeren Kante des geförderten Metallgutes von kleiner oder gleich 5 Mal der Erstreckung eines Luftspaltes d zwischen der ersten Spule und der zweiten Spule aufweist, und/oder die zweite Spule zumindest eine Windung aufweist, die durch zumindest zwei zweite über einen zweiten Verbindungssteg verbundene Leiterprofile gebildet wird, wobei der zweite Verbindungssteg der zweiten Spule einen zweiten Kantenabstand zu einer ersten äußeren Kante des geförderten Metallgutes von kleiner oder gleich 5 Mal der Erstreckung des Luftspaltes d zwischen der ersten Spule und der zweiten Spule aufweist.

Eine derart ausgebildete Induktionserwärmungsvorrichtung weist den Vorteil auf, dass bei der induktiven Erwärmung eines Metallgutes eine gesteigerte Erwärmungshomogenität, insbesondere eine gesteigerte Erwärmungshomogenität in der Breitenerstreckung des Metallgutes, erreicht wird.

Bei einer Längsfeldinduktion verlaufen die von der ersten Spule in dem Metallgut induzierten Ströme entgegen der Richtung der von der zweiten Spule induzierten Ströme. Die von der ersten Spule in dem Metallgut induzierten Ströme verlaufen auf der ersten Seite des Metallgutes in Richtung der Breitenerstreckung und schließen sich über die erste äußere Kante des Metallgutes mit den von der zweiten Spule in dem Metallgut induzierten Strömen. Die von der zweiten Spule in dem Metallgut induzierten Ströme verlaufen auf der zweiten Seite des Metallgutes in entgegengesetzter Richtung zu der von der ersten Spule induzierten Ströme entlang der Breitenerstreckung des Metallgutes und schließen sich wiederum über eine zweite äußere Kante des Metallgutes mit den von der ersten Spule induzierten Strömen. Dadurch bilden die induzierten Ströme der ersten und zweiten Spule einen geschlossenen Stromkreislauf in einer Ebene orthogonal zu der Förderrichtung des Metallgutes. Somit wird insbesondere kein Strom induziert, der in der ersten äußeren Kante und/oder in der zweiten äußeren Kante in Richtung der Förderrichtung verläuft. Dadurch wird eine Überhitzung der äußeren Kanten vermieden, sodass das Metallgut eine erhöhte Erwärmungshomogenität in der Breitenerstreckung des Metallgutes während der induktiven Erwärmung erfährt.

Das Metallgut weist vorzugsweise eine zweite äußere Kante auf. Die erste äußere Kante und die zweite äußere Kante sind vorzugsweise einander gegenüberliegende Seiten des Metallguts. Die erste äußere Kante und die zweite äußere Kante des Metallguts begrenzen das Metallgut in der Breitenerstreckung des Metallguts. Die erste äußere Kante und die zweite äußere Kante verlaufen zumindest teilweise parallel, vorzugsweise im Wesentlichen parallel, zu einer durch die Förderrichtung und durch die Abstandsrichtung aufgespannten Ebene. Bei einem als Metallbramme oder Metallband ausgebildeten Metallgut sind die erste äußere Kante und die zweite äußere Kante im Wesentlichen orthogonal zur ersten Seite und zur zweiten Seite des Metallguts angeordnet. Die erste äußere Kante und die zweite äußere Kante können insbesondere bei dem als Metallbramme oder als Metallband ausgebildeten Metallgut auch als Seitenflächen des Metallgutes bezeichnet werden.

Der erste Verbindungssteg der ersten Spule kann einen ersten Kantenabstand zu der ersten äußeren Kante des geförderten Metallgutes von ≤ 4 Mal, ≤ 3 Mal, ≤ 2 Mal oder ≤ 1,5 Mal der Erstreckung des Luftspaltes d zwischen der ersten Spule und der zweiten Spule aufweisen.

Der erste Verbindungssteg der ersten Spule kann einen ersten Kantenabstand zu der ersten äußeren Kante des geförderten Metallgutes von ≥ 0 Mal, ≥ 0,5 Mal, ≥ 1 Mal oder ≥ 1,5 Mal der Erstreckung des Luftspaltes d zwischen der ersten Spule und der zweiten Spule aufweisen.

Eine derart ausgebildete Induktionserwärmungsvorrichtung weist den Vorteil auf, dass bei der induktiven Erwärmung des Metallgutes ein hoher elektrischer Wirkungsgrad zwischen den Spulen und dem Metallgut und dabei gleichzeitig eine gesteigerte Erwärmungshomogenität des Metallgutes, insbesondere eine gesteigerte Erwärmungshomogenität in der Breitenerstreckung des Metallgutes, erreicht wird.

Nach einer bevorzugten Ausführungsform kann der erste Verbindungssteg der ersten Spule einen ersten Kantenabstand zu der ersten äußeren Kante des geförderten Metallgutes in einem Bereich von ≥ 0,5 Mal und ≤ 3 Mal, ≥ 1 Mal und ≤ 3 Mal, ≥ 1 Mal und ≤ 2 Mal der Erstreckung des Luftspaltes d zwischen der ersten Spule und der zweiten Spule aufweisen.

Eine derart ausgebildete Induktionserwärmungsvorrichtung weist den Vorteil auf, dass bei der induktiven Erwärmung des Metallgutes ein besonders hoher elektrischer Wirkungsgrad zwischen den Spulen und dem Metallgut und dabei gleichzeitig eine besonders gesteigerte Erwärmungshomogenität des Metallgutes, insbesondere eine besonders gesteigerte Erwärmungshomogenität in der Breitenerstreckung des Metallgutes, erreicht wird.

Der zweite Verbindungssteg der zweiten Spule kann einen zweiten Kantenabstand zu der ersten äußeren Kante des geförderten Metallgutes von ≤ 4 Mal, ≤ 3 Mal, ≤ 2 Mal oder ≤ 1,5 Mal der Erstreckung des Luftspaltes d zwischen der ersten Spule und der zweiten Spule aufweisen.

Der zweite Verbindungssteg der zweiten Spule kann einen zweiten Kantenabstand zu der ersten äußeren Kante des geförderten Metallgutes von ≥ 0 Mal, ≥ 0,5 Mal, ≥ 1 Mal oder ≥ 1,5 Mal der Erstreckung des Luftspaltes d zwischen der ersten Spule und der zweiten Spule aufweisen.

Nach einer bevorzugten Ausführungsform kann der zweite Verbindungssteg der zweiten Spule einen zweiten Kantenabstand zu der ersten äußeren Kante des geförderten Metallgutes in einem Bereich von ≥ 0,5 Mal und ≤ 3 Mal, ≥ 1 Mal und ≤ 3 Mal, ≥ 1 Mal und ≤ 2 Mal der Erstreckung des Luftspaltes d zwischen der ersten Spule und der zweiten Spule aufweisen.

Der erste Kantenabstand und/oder der zweite Kantenabstand sind in der Querrichtung ausgerichtet.

Der erste Verbindungssteg der ersten Spule bildet mit den beiden ersten Leiterprofilen der ersten Spule eine Windung bezogen auf einen Raum zwischen den beiden ersten Leiterprofilen. Der zweite Verbindungssteg der zweiten Spule bildet mit den beiden zweiten Leiterprofilen der zweiten Spule eine Windung bezogen auf einen Raum zwischen den beiden zweiten Leiterprofilen.

Der erste Verbindungssteg kann mit den beiden ersten Leiterprofilen derart verbunden sein, dass die erste Spule eine U-Form aufweist. Der zweite Verbindungssteg kann mit den beiden zweiten Leiterprofilen derart verbunden sein, dass die zweite Spule eine U-Form aufweist.

Der erste Kantendabstand kann im Wesentlichen dem zweiten Kantenabstand entsprechen. Mit anderen Worten können der erste Kantenabstand und der zweite Kantenabstand den gleichen betraglichen Abstandswert aufweisen.

Der Luftspalt d zwischen der ersten Spule und der zweiten Spule ist der betragliche Abstand zwischen der ersten Spule und der zweiten Spule in der Abstandsrichtung. Mit anderen Worten entspricht die Erstreckung des Luftspaltes d der betraglichen Summe des ersten Abstands, der Dickenerstreckung des Metallgutes und des zweiten Abstands.

Der Luftspalt d zwischen der ersten Spule und der zweiten Spule kann eine Erstreckung in der Abstandsrichtung von ≤ 350 mm, ≤ 300 mm, ≤ 250 mm, ≤ 200 mm, ≤ 150 mm oder ≤ 100 mm aufweisen. Der Luftspalt d zwischen der ersten Spule und der zweiten Spule kann eine Erstreckung in der Abstandsrichtung von ≥ 350 mm, ≥ 300 mm, ≥ 250 mm, ≥ 200 mm, ≥ 150 mm oder ≥ 100 mm aufweisen.

Der Luftspalt d zwischen der ersten Spule und der zweiten Spule kann eine Erstreckung in der Abstandsrichtung von ≤ 350 mm und ≥ 100 mm, ≤ 300 mm und ≥ 150 mm, ≤ 250 mm und ≥ 150 mm oder ≤ 250 mm und ≥ 200 mm aufweisen.

Der von der ersten Spule und der zweiten Spule zumindest teilweise begrenzte Abstandsraum kann auch als elektrischer Wirkbereich bezeichnet werden. In dem elektrischen Wirkbereich kann das durch die erste Spule und die zweite Spule erzeugte Magnetfeld mit dem Metallgut wechselwirken. Der Luftspalt d kann die Erstreckung des Abstandsraumes in der Abstandsrichtung bilden.

Die Induktionserwärmungsvorrichtung ist vorzugsweise derart ausgebildet, dass die zumindest zwei zweiten Leiterprofile der zweiten Spule einen zweiten Polabstand von kleiner oder gleich 4 Mal der Erstreckung des Luftspaltes d zueinander aufweisen.

Der Polabstand von zwei miteinander elektrisch verbundenen Leiterprofilen einer Spule ist der Abstand zwischen den beiden Leiterprofilen in der Förderrichtung.

Eine derart ausgebildete Induktionserwärmungsvorrichtung weist den Vorteil auf, dass bei der induktiven Erwärmung des Metallgutes eine gesteigerte Erwärmungshomogenität, insbesondere eine gesteigerte Erwärmungshomogenität in der Breitenerstreckung des Metallgutes, erreicht wird.

Die von der ersten Spule und der zweiten Spule in dem Metallgut induzierten Ströme verlaufen jeweils in entgegengesetzter Richtung zu den durch die beiden ersten Leiterprofile der ersten Spule und zu den durch die beiden zweiten Leiterprofile der zweiten Spule fließenden Ströme. Mit größer werdendem Polabstand zwischen zwei Leiterprofilen einer Spule, sinkt die gegenseitige Beeinflussung der induzierten Ströme einer Spule und der elektrische Wirkungsgrad zwischen der Spule und dem Metallgut steigt. Durch die verringerte gegenseitige Beeinflussung der durch die zwei Leiterprofile einer Spule induzierten Ströme in dem Metallgut schließen sich die von der ersten Spule induzierten Ströme in dem Metallgut mit den von der zweiten Spule induzierten Ströme in dem Metallgut über die erste äußere Kante und die zweite äußere Kante und bilden einen geschlossenen Stromkreislauf in einer Ebene orthogonal zur Förderrichtung des Metallgutes. Somit wird insbesondere kein Strom induziert, der in der ersten äußeren Kante und/oder der zweiten äußeren Kante in Richtung der Förderrichtung verläuft. Dadurch wird eine Überhitzung der äußeren Kanten vermieden, sodass das Metallgut eine erhöhte Erwärmungshomogenität in der Breitenerstreckung des Metallgutes während der induktiven Erwärmung erfährt.

Die zwei ersten Leiterprofile können einen ersten Polabstand von ≤ 3 Mal, ≤ 2,6 Mal, ≤ 2,4 Mal oder ≤ 2,2 Mal der Erstreckung des Luftspaltes d zueinander aufweisen.

Eine derart ausgebildete Induktionserwärmungsvorrichtung weist den Vorteil auf, dass bei der induktiven Erwärmung des Metallgutes ein hoher elektrischer Wirkungsgrad zwischen den Spulen und dem Metallgut und dabei gleichzeitig eine gesteigerte Erwärmungshomogenität des Metallgutes, insbesondere eine gesteigerte Erwärmungshomogenität in der Breitenerstreckung des Metallgutes, erreicht wird.

Die zwei ersten Leiterprofile können einen ersten Polabstand von ≥ 0,5 Mal, ≥ 1 Mal, ≥ 1,5 Mal oder ≥ 1,8 Mal der Erstreckung des Luftspaltes d zueinander aufweisen.

Nach einer bevorzugten Ausführungsform können die zwei ersten Leiterprofile einen ersten Polabstand zueinander in einem Bereich von ≥ 0,5 Mal und ≤ 4 Mal, ≥ 1 Mal und ≤ 3 Mal, ≥ 1,5 Mal und ≤ 2,5 Mal, ≥ 1,8 Mal und ≤ 2,5 Mal oder ≥ 1,8 Mal und ≤ 2,2 Mal der Erstreckung des Luftspaltes d aufweisen.

Eine derart ausgebildete Induktionserwärmungsvorrichtung weist den Vorteil auf, dass bei der induktiven Erwärmung des Metallgutes ein besonders hoher elektrischer Wirkungsgrad zwischen den Spulen und dem Metallgut und dabei gleichzeitig eine besonders gesteigerte Erwärmungshomogenität des Metallgutes, insbesondere eine gesteigerte Erwärmungshomogenität in der Breitenerstreckung des Metallgutes, erreicht wird.

Die zwei zweiten Leiterprofile können einen zweiten Polabstand von ≤ 3 Mal, ≤ 2,6 Mal, ≤ 2,4 Mal oder ≤ 2,2 Mal der Erstreckung des Luftspaltes d zueinander aufweisen.

Die zwei zweiten Leiterprofile können einen zweiten Polabstand von ≥ 0,5 Mal, ≥ 1 Mal, ≥ 1,5 Mal oder ≥ 1,8 Mal der Erstreckung des Luftspaltes d zueinander aufweisen.

Nach einer bevorzugten Ausführungsform können die zwei zweiten Leiterprofile einen zweiten Polabstand zueinander in einem Bereich von ≥ 0,5 Mal und ≤ 4 Mal, ≥ 1 Mal und ≤ 3 Mal, ≥ 1,5 Mal und ≤ 2,5 Mal, ≥ 1,8 Mal und ≤ 2,5 Mal oder ≥ 1,8 Mal und ≤ 2,2 Mal der Erstreckung des Luftspaltes d aufweisen.

Die erste Spule kann derart angeordnet sein, dass sich die beiden ersten Leiterprofile bezüglich einer durch die Abstandsrichtung und die Querrichtung aufgespannten Ebene gegenüberliegen. Bei einer horizontal verlaufenden Förderrichtung kann die erste Spule derart angeordnet sein, dass die beiden ersten Leiterprofile in der Förderrichtung aufeinander folgend angeordnet sind.

Die zweite Spule kann derart angeordnet sein, dass sich die beiden zweiten Leiterprofile bezüglich einer durch die Abstandsrichtung und die Querrichtung aufgespannten Ebene gegenüberliegen. Bei einer horizontal verlaufenden Förderrichtung kann die zweite Spule derart angeordnet sein, dass die beiden zweiten Leiterprofile in der Förderrichtung aufeinander folgend angeordnet sind.

Die beiden ersten Leiterprofile sind vorzugsweise mit dem ersten Verbindungssteg verschweißt und weiter vorzugsweise monolithisch verbunden. Die beiden zweiten Leiterprofile sind vorzugsweise mit dem zweiten Verbindungssteg verschweißt und weiter vorzugsweise monolithisch verbunden.

Die Leiterprofile der ersten Spule und/oder der zweiten Spule können einen Rechteckprofilquerschnitt, in einer von der Förderrichtung und der Abstandsrichtung aufgespannten Querschnittsebene aufweisen. Der Verbindungssteg der ersten Spule und/oder der zweiten Spule kann einen Rechteckprofilquerschnitt, in einer von der Querrichtung und der Abstandsrichtung aufgespannten Querschnittsebene aufweisen.

Die Leiterprofile der ersten Spule und/oder der zweiten Spule kann/können einen Hohlprofilquerschnitt, vorzugsweise einen Rechteck-Hohlprofilquerschnitt in einer von der Förderrichtung und der Abstandsrichtung aufgespannten Querschnittsebene aufweisen.

Der Verbindungssteg der ersten Spule und/oder der zweiten Spule kann/können einen Hohlprofilquerschnitt, vorzugsweise einen Rechteck-Hohlprofilquerschnitt in einer von der Querrichtung und der Abstandsrichtung aufgespannten Querschnittsebene aufweisen.

Die freien Querschnitte der Leiterprofile und des Verbindungssteges der ersten Spule kann als ein erster Kühlfluidkanal und die freien Querschnitt der Leiterprofile und des Verbindungssteges der zweiten Spule kann als ein zweiter Kühlfluidkanal der zweiten Spule ausgebildet sein. Mit anderen Worten können die Leiterprofile und der Verbindungssteg der ersten Spule und/oder der zweiten Spule jeweils einen Kühlfluidkanal begrenzen.

Die Induktionserwärmungsvorrichtung kann eine Kühleinrichtung aufweisen, wobei die Kühleinrichtung zumindest einen ersten Kühlkreislauf aufweist, der einen ersten Zulauf und einen mit dem ersten Zulauf durch den ersten Kühlfluidkanal fluidverbundenen ersten Ablauf aufweist. Mit anderen Worten kann der erste Kühlkreislauf zumindest abschnittsweise durch den ersten Kühlfluidkanal im Inneren der ersten Spule verlaufen.

Der erste Kühlkreislauf kann ferner mit einem zweiten Zulauf und einem mit dem zweiten Zulauf durch den zweiten Kühlfluidkanal fluidverbundenen zweiten Ablauf aufweisen. Mit anderen Worten kann der erste Kühlkreislauf zumindest abschnittsweise durch den zweiten Kühlfluidkanal im Inneren der zweiten Spule verlaufen.

Die Kühleinrichtung kann zumindest einen zweiten Kühlkreislauf aufweisen, der einen zweiten Zulauf und einen mit dem zweiten Zulauf durch den zweiten Kühlfluidkanal fluidverbundenen zweiten Ablauf aufweist. Mit anderen Worten verläuft der Kühlkreislauf zumindest abschnittsweise durch den zweiten Kühlfluidkanal im Inneren der zweiten Spule.

Die Kühleinrichtung kann dazu eingerichtet sein, eine Kühlleistung von $\geq$ 500 kW, 750 kW oder 1000 kW für einen Zeitraum von zumindest einer Stunde, vorzugsweise für einen Zeitraum von 23 Stunden pro Tag, bereitzustellen. Die Kühleinrichtung kann dazu eingerichtet sein, Kühlleistung in Höhe von größer oder gleich 20%, vorzugsweise von größer oder gleich 30 % der durch die Energieversorgungseinrichtung bereitgestellten elektrischen Leistung für die erste und/oder zweite Spule bereitzustellen.

Die Leiterprofile und der Verbindungssteg der ersten Spule und/oder der zweiten Spule können eine im Wesentlichen konstante Wandstärke aufweisen. Die Wandstärke kann in Abhängigkeit der elektrischen Eindringtiefe des durch die Leiterprofile und die Verbindungsstege der ersten Spule und/oder der zweiten Spule fließenden Stromes ausgebildet sein. Die Wandstärke kann einen Betrag von größer oder gleich 2 Mal der elektrischen Eindringtiefe, vorzugsweise von größer oder gleich 3 Mal der elektrischen Eindringtiefe und besonders bevorzugt von größer oder gleich 4 Mal der elektrischen Eindringtiefe aufweisen.

Die Leiterprofile und der Verbindungssteg der ersten Spule und/oder zweiten Spule können eine Erstreckung in Abstandsrichtung von kleiner oder gleich 40 mm, vorzugsweise von kleiner oder gleich 35 mm und besonders bevorzugt von kleiner oder gleich 30 mm aufweisen.

Die Leiterprofile der ersten Spule und/oder zweiten Spule können eine Erstreckung in Förderrichtung von kleiner oder gleich 60 mm, vorzugsweise von kleiner oder gleich 55 mm und besonders bevorzugt von kleiner oder gleich 50 mm aufweisen.

Der Verbindungssteg der ersten Spule und/oder zweiten Spule können eine Erstreckung in Querrichtung von kleiner oder gleich 60 mm, vorzugsweise von kleiner oder gleich 55 mm und besonders bevorzugt von kleiner oder gleich 50 mm aufweisen.

Nach einer besonders bevorzugten Ausführungsform ist die Induktionserwärmungsvorrichtung derart ausgebildet, dass die Energieversorgungseinrichtung dazu eingerichtet ist, die erste Spule und die zweite Spule mit Wechselstrom und/oder Wechselspannung zu versorgen, sodass die Eindringtiefe $\delta$ von stromtragenden Schichten des geförderten Metallgutes in einem Bereich von $\leq$ 0,6 Mal und $\geq$ 0,3 Mal der Dickenerstreckung des Metallgutes liegt, und der erste Verbindungssteg der ersten Spule einen ersten Kantenabstand zu der ersten äußeren Kante des geförderten Metallgutes in einem Bereich von $\geq$ 0,5 Mal und $\leq$ 3 Mal der Erstreckung des Luftspaltes d zwischen der ersten Spule und der zweiten Spule aufweist, und der zweite Verbindungssteg der zweiten Spule einen zweiten Kantenabstand zu der ersten äußeren Kante des geförderten Metallgutes in einem Bereich von $\geq$ 0,5 Mal und $\leq$ 3 Mal der Erstreckung des Luftspaltes d zwischen der ersten Spule und der zweiten Spule aufweist, und die zwei ersten Leiterprofile einen ersten Polabstand zueinander in einem Bereich von $\geq$ 0,5 Mal und $\leq$ 4 Mal der Erstreckung des Luftspaltes d aufweisen, und die zwei zweiten Leiterprofile einen zweiten Polabstand zueinander in einem Bereich von $\geq$ 0,5 Mal und $\leq$ 4 Mal der Erstreckung des Luftspaltes d aufweisen.

Es konnte gezeigt werden, dass eine derart ausgebildete Induktionserwärmungsvorrichtung den Vorteil aufweist, dass bei der induktiven Erwärmung des Metallgutes ein besonders erhöhter elektrischer Wirkungsgrad zwischen den Spulen und dem Metallgut und dabei gleichzeitig eine gesteigerte Erwärmungshomogenität des Metallgutes in der Dickenerstreckung und der Breitenerstreckung des Metallgutes, erreicht wird.

Nach einer nochmals besonders bevorzugten Ausführungsform ist die Induktionserwärmungsvorrichtung derart ausgebildet, dass die Energieversorgungseinrichtung dazu eingerichtet ist, die erste Spule und die zweite Spule mit Wechselstrom und/oder Wechselspannung zu versorgen, sodass die Eindringtiefe $\delta$ von stromtragenden Schichten des geförderten Metallgutes in einem Bereich von $\leq$ 0,45 Mal und $\geq$ 0,4 Mal der Dickenerstreckung des Metallgutes liegt, und der erste Verbindungssteg der ersten Spule einen ersten Kantenabstand zu der ersten äußeren Kante des geförderten Metallgutes in einem Bereich von ≥ 1 Mal und ≤ 2 Mal der Erstreckung des Luftspaltes d zwischen der ersten Spule und der zweiten Spule aufweist, und der zweite Verbindungssteg der zweiten Spule einen zweiten Kantenabstand zu der ersten äußeren Kante des geförderten Metallgutes in einem Bereich von ≥ 1 Mal und ≤ 2 Mal der Erstreckung des Luftspaltes d zwischen der ersten Spule und der zweiten Spule aufweist, und die zwei ersten Leiterprofile einen ersten Polabstand zueinander in einem Bereich von ≥ 1,8 Mal und ≤ 2,2 Mal der Erstreckung des Luftspaltes d aufweisen, und die zwei zweiten Leiterprofile einen zweiten Polabstand zueinander in einem Bereich von ≥ 1,8 Mal und ≤ 2,2 Mal der Erstreckung des Luftspaltes d aufweisen.

Es konnte gezeigt werden, dass eine derart ausgebildete Induktionserwärmungsvorrichtung den Vorteil aufweist, dass bei der induktiven Erwärmung des Metallgutes ein nochmals besonders erhöhter elektrischer Wirkungsgrad zwischen den Spulen und dem Metallgut und dabei gleichzeitig eine nochmals gesteigerte Erwärmungshomogenität des Metallgutes in der Dickenerstreckung und der Breitenerstreckung des Metallgutes, erreicht wird.

Die Induktionserwärmungsvorrichtung ist vorzugsweise derart ausgebildet, dass die Energieversorgungseinrichtung dazu geeignet ist, die erste Spule und die zweite Spule mit Wechselstrom- und/oder Wechselspannungsfrequenzen von kleiner oder gleich 100 kHz zu versorgen.

Die Energieversorgungseinrichtung kann dazu geeignet oder eingerichtet sein, die erste Spule und die zweite Spule mit Wechselstrom- und/oder Wechselspannungsfrequenzen von kleiner oder gleich 50 kHz, vorzugsweise von kleiner oder gleich 25 kHz und besonders bevorzugt von kleiner oder gleich 10 kHz zu versorgen.

Die Energieversorgungseinrichtung kann dazu geeignet oder eingerichtet sein, die erste Spule und die zweite Spule mit Wechselstrom- und/oder Wechselspannungsfrequenzen von größer oder gleich 0,1 kHz, vorzugsweise von größer oder gleich 0,5 kHz und besonders bevorzugt von kleiner oder gleich 1 kHz zu versorgen.

Gemäß einer bevorzugten Ausführungsform kann die Energieversorgungseinrichtung dazu geeignet oder eingerichtet sein, die erste Spule und die zweite Spule mit Wechselstrom- und/oder Wechselspannungsfrequenzen in einem Bereich von größer oder gleich 0,5 kHz und kleiner oder gleich 50 kHz zu versorgen. Gemäß einer besonders bevorzugten Ausführungsform kann die Energieversorgungseinrichtung dazu geeignet oder eingerichtet sein, die erste Spule und die zweite Spule mit Wechselstrom- und/oder Wechselspannungsfrequenzen in einem Bereich von größer oder gleich 1 kHz und kleiner oder gleich 10 kHz zu versorgen.

Die Induktionserwärmungsvorrichtung ist vorzugsweise derart ausgebildet, dass die Energieversorgungseinrichtung dazu geeignet oder eingerichtet ist, die erste Spule und/oder die zweite Spule jeweils mit elektrischer Leistung von zumindest 1000 kW über einen Zeitraum von zumindest einer Minute zu versorgen, und/oder die erste Spule und/oder die zweite Spule dazu geeignet oder eingerichtet ist/sind, jeweils eine elektrische Leistung von zumindest 1000 kW über einen Zeitraum von zumindest einer Minute aufzunehmen.

Die Energieversorgungseinrichtung kann dazu geeignet oder eingerichtet sein, die erste Spule und/oder die zweite Spule jeweils mit elektrischer Leistung von zumindest 1000 kW über einen Zeitraum von 23 Stunden, insbesondere von über einen Zeitraum von 23 Stunden pro Tag, zu versorgen.

Eine erste Spulenfläche kann durch die einer ersten Seite des Metallgutes zugewandten Seiten der ersten Leiterprofile der ersten Spule gebildet sein.

Die erste Spulenfläche kann derart ausgebildet sein, dass sich durch die Leistungsaufnahme der ersten Spule eine Leistungsdichte in der ersten Spulenfläche von kleiner oder gleich 400 W/cm$^2$, vorzugsweise kleiner oder gleich 500 W/cm$^2$ einstellt. Mit anderen Worten können die ersten Leiterprofile eine Erstreckung in Förderrichtung und eine Erstreckung in Querrichtung aufweisen, sodass eine derartig ausgebildete erste Spulenfläche ausgebildet ist.

Eine erste Spulenfläche kann zusätzlich die einer ersten Seite des Metallgutes zugewandte Seite des ersten Verbindungsstegs aufweisen.

Eine zweite Spulenfläche kann durch die einer zweiten Seite des Metallgutes zugewandten Seiten der zweiten Leiterprofile der zweiten Spule gebildet sein.

Die zweite Spulenfläche kann derart ausgebildet sein, dass sich durch die Leistungsaufnahme der zweiten Spule eine Leistungsdichte in der zweiten Spulenfläche von kleiner oder gleich 400 W/cm$^2$, vorzugsweise kleiner oder gleich 500 W/cm$^2$ einstellt. Mit anderen Worten können die zweiten Leiterprofile eine Erstreckung in Förderrichtung und eine Erstreckung in Querrichtung aufweisen, sodass eine derartig ausgebildete zweite Spulenfläche ausgebildet ist.

Eine zweite Spulenfläche kann zusätzlich die einer zweiten Seite des Metallgutes zugewandte Seite des zweiten Verbindungsstegs aufweisen.

Die Induktionserwärmungsvorrichtung ist vorzugsweise derart ausgebildet, dass Induktionserwärmungsvorrichtung eine Verfahreinrichtung aufweist, die dazu geeignet ist, die zumindest eine erste Spule und/oder die zumindest eine zweite Spule des Induktors in der Abstandsrichtung und/oder in einer Querrichtung und/oder in der Förderrichtung des Metallgutes zu verfahren, insbesondere in eine Arbeitsposition zu verfahren.

Die Verfahreinrichtung kann dazu eingerichtet sein die zumindest eine erste Spule und/oder die zumindest eine zweite Spule des Induktors in der Abstandsrichtung und/oder in einer Querrichtung und/oder in der Förderrichtung des Metallgutes zu verfahren, insbesondere in eine Arbeitsposition zu verfahren.

In einer Arbeitsposition kann eine elektrische Wirkverbindung zwischen der ersten Spule und dem Metallgut und zwischen der zweiten Spule und dem Metallgut herbeigeführt werden. Insbesondere wird in einer Arbeitsposition der Induktionsheizvorrichtung ein Metallgut zwischen der ersten Spule und der zweiten Spule hindurch gefördert.

Die Verfahreinrichtung kann dazu eingerichtet sein, den ersten Abstand zwischen der ersten Spule und einer ersten Seite des geförderten Metallgutes und/oder den zweiten Abstand zwischen der zweiten Spule und einer zweiten Seite des geförderten Metallgutes zu verringern und/oder zu vergrößern.

Die Induktionserwärmungsvorrichtung ist vorzugsweise derart ausgebildet, dass die erste Spule einen ersten Kern aufweist, wobei der erste Kern derart angeordnet ist, dass, wenn die erste Spule von einem Wechselstrom durchflossen wird, der erste Kern einen magnetischen Pfad für einen durch den durch die erste Spule fließenden Wechselstrom erzeugten magnetischen Fluss bildet; und/oder die zweite Spule einen zweiten Kern aufweist, wobei der zweite Kern derart angeordnet ist, dass, wenn die zweite Spule von einem Wechselstrom durchflossen wird, der zweite Kern einen magnetischen Pfad für einen durch den durch die zweite Spule fließenden Wechselstrom erzeugten magnetischen Fluss bildet.

Eine derart ausgebildete Induktionserwärmungsvorrichtung weist den Vorteil auf, dass der von der ersten und/oder von der zweiten stromdurchflossenen Spule erzeugte magnetische Streufluss des erzeugten magnetischen Wechselfeldes verringert ist. Durch den durch den ersten Kern und oder durch den zweiten Kern gebildete magnetische Pfad werden die magnetischen Feldlinien geführt und so der magnetische Fluss konzentriert in Richtung des Metallgutes gelenkt. Dadurch weist die Induktionserwärmungsvorrichtung einen gesteigerten elektrischen Wirkungsgrad zwischen den Spulen und dem Metallgut auf.

Der erste Kern und/oder der zweite Kern kann/können ein Metall aufweisen oder aus diesem gebildet sein. Der erste Kern und/oder der zweite Kern kann/können ein ferritisches Eisenpulver in einer Harzmatrix aufweisen oder aus diesem gebildet sein.

Die erste Spule kann zwei erste Kerne aufweisen, wobei jeweils ein erster Kern jeweils ein erstes Leiterprofil zumindest abschnittweise umgibt. Die ersten Kerne können die ersten Leiterprofile in einem Querschnitt in einer von der Förderrichtung und der Abstandsrichtung aufgespannten Querschnittsebene zumindest teilweise, vorzugsweise vollständig, umgeben. Die der ersten Seite des Metallgutes zugewandte Seite der ersten Leiterprofile kann vorzugsweise frei von Material der ersten Kerne sein.

Die zweite Spule kann zwei zweite Kerne aufweisen, wobei jeweils ein zweiter Kern jeweils ein zweites Leiterprofil zumindest abschnittweise umgibt. Die zweiten Kerne können die zweiten Leiterprofile in einem Querschnitt in einer von der Förderrichtung und der Abstandsrichtung aufgespannten Querschnittsebene zumindest teilweise, vorzugsweise vollständig, umgeben. Die der zweiten Seite des Metallgutes zugewandte Seite der zweiten Leiterprofile kann vorzugsweise frei von Material der zweiten Kerne sein.

Eine derart ausgebildete Induktionserwärmungsvorrichtung weist den Vorteil auf, dass der von der ersten und/oder von der zweiten stromdurchflossenen Spule erzeugte magnetische Streufluss des erzeugten magnetischen Wechselfeldes nochmals verringert wird. Dadurch weist die Induktionserwärmungsvorrichtung einen nochmals gesteigerten elektrischen Wirkungsgrad zwischen den Spulen und dem Metallgut auf.

Die ersten Kerne können die ersten Leiterprofile jeweils entlang der Querrichtung zumindest teilweise umgeben. Insbesondere können die ersten Kerne die ersten Leiterprofile entlang der Querrichtung über einen Längenbereich, der größer oder gleich der Breitenerstreckung des geförderten Metallgutes, vorzugsweise größer oder gleich der Summe der Breitenerstreckung des geförderten Metallgutes und des ersten Kantenabstandes, ist, umgeben.

Die zweiten Kerne können die zweiten Leiterprofile jeweils entlang der Querrichtung zumindest teilweise umgeben. Insbesondere können die zweiten Kerne die zweiten Leiterprofile entlang der Querrichtung über einen Längenbereich, der größer oder gleich der Breitenerstreckung des geförderten Metallgutes, vorzugsweise größer oder gleich der Summe der Breitenerstreckung des geförderten Metallgutes und des zweiten Kantenabstandes, ist, umgeben.

Die ersten Kerne können mit der ersten Spule ein zusammenhängendes Bauteil bilden.

Die Induktionserwärmungsvorrichtung ist vorzugsweise derart ausgebildet, dass die Induktionserwärmungsvorrichtung zumindest eine erste Kondensatoreinrichtung aufweist, wobei die erste Kondensatoreinrichtung mit der zumindest einen ersten Spule zu einem ersten Teilschwingkreis verschaltet ist, und/oder wobei die eine erste Kondensatoreinrichtung mit der zumindest einen zweiten Spule zu einem zweiten Teilschwingkreis verschaltet ist, und/oder zumindest eine zweite Kondensatoreinrichtung aufweist, wobei die zweite Kondensatoreinrichtung mit der zumindest einen zweiten Spule zu einem zweiten Teilschwingkreis verschaltet ist.

Die erste Kondensatoreinrichtung und/oder die zweite Kondensatoreinrichtung kann einen einzelnen Kondensator aufweisen. Alternativ kann die erste Kondensatoreinrichtung und/oder die zweite Kondensatoreinrichtung eine Vielzahl an Kondensatoren aufweisen, die parallel und/oder in Reihe zueinander verschaltet sind.

Die Induktionserwärmungsvorrichtung ist vorzugsweise derart ausgebildet, dass die Induktionserwärmungsvorrichtung zumindest einen Anpassungstransformator aufweist, wobei der Anpassungstransformator mit seiner Sekundärseite zumindest mittelbar mit der zumindest einen ersten Spule und/oder mit der zumindest einen zweiten Spule elektrisch verbunden ist.

Der Anpassungstransformator kann mit seiner Sekundärseite unmittelbar mit der ersten Kondensatoreinrichtung und/oder mit der zweiten Kondensatoreinrichtung elektrisch verbunden sein, vorzugsweise mittels eines Kabels und besonders bevorzugt mittels Stromschienen.

Der Anpassungstransformator kann mit seiner Primärseite zumindest mittelbar, vorzugsweise unmittelbar, mit der Energieversorgungseinrichtung verbunden sein.

Der Anpassungstransformator kann als Trockentransformator ausgebildet sein. Der Anpassungstransformator kann alternativ als wassergekühlter Transformator, insbesondere als wassergekühlter Autotransformator oder als wassergekühlter Isoliertransformator ausgebildet sein. Insbesondere kann der Anpassungstransformator dazu ausgebildet sein, zwei um 180 ° phasenverschobene Wechselströme und Wechselspannungen bereitzustellen.

Die Induktionserwärmungsvorrichtung ist vorzugsweise derart ausgebildet, dass die Energieversorgungseinrichtung dazu eingerichtet ist die zumindest eine erste Spule und die zumindest eine zweite Spule mit Wechselstrom zu versorgen, wobei der Wechselstrom der zumindest einen ersten Spule und der Wechselstrom der zumindest einen zweiten Spule die gleiche Phase oder eine Phasenverschiebung zueinander aufweisen können, und dass die Energieversorgungseinrichtung dazu eingerichtet ist die zumindest eine erste Spule und die zumindest eine zweite Spule mit Wechselspannung zu versorgen, wobei die Wechselspannung der zumindest einen ersten Spule und die Wechselspannung der zumindest einen zweiten Spule die gleiche Phase oder eine Phasenverschiebung zueinander aufweisen können.

Die Energieversorgungseinrichtung kann dazu eingerichtet sein die zumindest eine erste Spule und die zumindest eine zweite Spule mit Wechselstrom zu versorgen, wobei der Wechselstrom der zumindest einen ersten Spule und der Wechselstrom der zumindest einen zweiten Spule eine Phasenverschiebung von 180 ° zueinander aufweisen.

Die Energieversorgungseinrichtung kann dazu eingerichtet sein die zumindest eine erste Spule und die zumindest eine zweite Spule mit Wechselspannung zu versorgen, wobei die Wechselspannung der zumindest einen ersten Spule und die Wechselspannung der zumindest einen zweiten Spule eine Phasenverschiebung von 180 ° zueinander aufweisen.

Eine Induktionserwärmungsvorrichtung mit einer derart ausgebildeten Energieversorgungseinrichtung erzeugt eine Längsfeldinduktion. Mit anderen Worten verlaufen magnetischen Feldlinien der durch die erste Spule und die zweite Spule erzeugten Magnetfelder in entgegengesetzter Richtung und heben sich in überlappenden Bereichen der Magnetfelder gegenseitig auf. Insbesondere bei einer gleichen räumlichen Anordnung der ersten Spule und der zweiten Spule bezüglich der Förderrichtung und der Breitenrichtung heben sich die Magnetfelder in überlappenden Bereichen der Magnetfelder gegenseitig genau auf.

Die Induktionserwärmungsvorrichtung ist vorzugsweise derart ausgebildet, dass die Induktionserwärmungsvorrichtung eine Mehrzahl von Induktoren aufweist, wobei die zumindest eine Energieversorgungseinrichtung mit den ersten Spulen und den zweiten Spulen der Mehrzahl von Induktoren verbunden ist und dazu eingerichtet ist die ersten Spulen und die zweiten Spulen der Mehrzahl von Induktoren mit elektrischer Energie zu versorgen.

Die Induktionserwärmungsvorrichtung ist vorzugsweise derart ausgebildet, dass die Induktionserwärmungsvorrichtung eine Mehrzahl von Energieversorgungseinrichtungen aufweist, wobei jede Energieversorgungseinrichtung mit der zumindest einen ersten Spule und mit der zumindest einen zweiten Spule des zumindest einen Induktors verbunden ist und dazu eingerichtet die erste Spule und die zweite Spule dieses Induktors mit elektrischer Energie zu versorgen.

Die Induktionserwärmungsvorrichtung ist vorzugsweise derart ausgebildet, dass Induktionserwärmungsvorrichtung eine Steuerungs- und Regelungseinrichtung aufweist, wobei die Steuerungs- und Regelungseinrichtung dazu eingerichtet ist die Versorgung der ersten Spule und/oder der zweiten Spule mit elektrischer Energie zu steuern und/oder zu regeln.

Die der vorliegenden Erfindung zugrundeliegende Aufgabe wird außerdem durch eine Produktionslinie zur Herstellung und/oder Verarbeitung eines Metallgutes mit den Merkmalen von Anspruch 14 der vorliegenden Erfindung gelöst.

Die Produktionslinie weist zumindest eine zuvor beschriebene erfindungsgemäße Induktionserwärmungsvorrichtung auf. Vorzugsweise weist die Produktionslinie eine Vielzahl zuvor beschriebener erfindungsgemäßer Induktionserwärmungsvorrichtungen auf.

Die der vorliegenden Erfindung zugrundeliegende Aufgabe wird ferner durch die Verwendung der erfindungsgemäßen einer Induktionserwärmungsvorrichtung und/oder der erfindungsgemäßen Produktionslinie.

In Versuchsreihen zur Verbesserung einer Induktionserwärmungsvorrichtung wurden verschiedene Parameter der Induktionserwärmungsvorrichtung in multivariaten Versuchsreihen variiert. Insbesondere wurden die Eindringtiefe $\delta$, der Polabstand sowie die Kantenabstände genauer untersucht. Die bei den Versuchen festgestellten Vorteile, Einzelheiten und Merkmale der Erfindung ergeben sich nachfolgend aus den weiteren erläuterten Ausführungsbeispielen.

Überraschenderweise und entgegen der bisherigen Annahme, dass höhere Eindringtiefen $\delta$ auch zu einem höheren elektrischen Wirkungsgrad zwischen den Spulen und dem Metallgut führen, wurde herausgefunden, dass der elektrische Wirkungsgrad zwischen den Spulen und dem Metallgut bei weiterer Zunahme der Eindringtiefe $\delta$ wieder abnimmt.

Aus den Versuchsreihen ergab sich, dass eine Eindringtiefe $\delta$ mit einer spezifizierten maximalen Eindringtiefe, bzw. in bestimmten definierten Bereichen besonders vorteilhaft ist. Die Versuchsreihen haben zu den in Tabelle 1 dargestellten Ergebnisse geführt.

Tab. 1: Eindringtiefe $\delta$, Elektrischer Wirkungsgrad und Erwärmungshomogenität in Dickenerstreckungsrichtung (Bewertung jeweils zwischen 0 und 10, wobei 0 die kleinstmögliche Ausprägung und 10 die größtmögliche Ausprägung der jeweiligen Eigenschaft bedeutet.)

| Eindringtiefe $\delta$ von stromtragenden Schichten des Metallgutes in Abhängigkeit der Dickenerstreckungt des Metallgutes | Elektrischer Wirkungsgrad zwischen Spulen und Metallgut | Erwärmungshomogenität entlang der Dickenerstreckung des Metallgutes |
|---|---|---|
| 0,1t | 10 | 0,5 |
| 0,2t | 10 | 2 |
| 0,3t | 10 | 6 |
| 0,35t | 10 | 8 |
| 0,4t | 10 | 9 |
| 0,45t | 10 | 9 |
| 0,5t | 9 | 9 |
| 0,55t | 8 | 10 |
| 0,6t | 7 | 10 |
| 0,7t | 5 | 10 |
| 0,8t | 3 | 10 |
| 0,9t | 2 | 10 |
| 1t | 1,8 | 10 |
| 1,5t | 1,2 | 10 |
| 2t | 0,6 | 10 |

Die Eindringtiefe $\delta$ wurde in den Versuchsreihen gemäß dem Zusammenhang in Formel (1) eingestellt. Für ein Metallgut kann eine temperaturabhängige Frequenz der durch die erste und zweite Spule fließenden Wechselströme für eine bestimmte Eindringtiefe $\delta$ näherungsweise ermittelt werden.

Mittels einer thermografischen Aufnahme mit einer Wärmebildkamera der Oberfläche des Metallgutes, insbesondere der ersten Seite und/oder der zweiten Seite des Metallgutes, wurde die Erwärmungshomogenität entlang der Dickenerstreckung des Metallgutes sowie der elektrische Wirkungsgrad mittelbar bestimmt. Die in dem Metallgut erzeugte Wärmeenergie, und damit die Temperatur des Metallgutes, bestimmt sich nach dem Stromwärmegesetz (auch "Erstes Joulsches Gesetz" genannt) und ist direkt abhängig von dem durch das Metallgut fließenden elektrischen Strom. Ausgehend von der an der Oberfläche des Metallgutes, insbesondere an der ersten Seite und/oder der zweiten Seite des Metallgutes, gemessenen Temperatur kann über den in Formel (1) beschriebenen Zusammenhang die Temperatur in Dickenerstreckung des Metallgutes über die Stromdichte in verschiedenen Schichten der Dickenerstreckung des Metallgutes näherungsweise berechnet werden. Der elektrische Wirkungsgrad zwischen den Spulen und dem Metallgut wurde darauffolgend gemäß dem Zusammenhang in Formel (2) bestimmt. Aus der im Metallgut umgesetzten Wärmenergie wurde für einen definierten Zeitbereich die im Metallgut umgesetzte Leistung bestimmt. Aus der im selben Zeitbereich gemessenen elektrischen Leistung die der ersten Spule und der zweiten Spule bereitgestellt wurde, konnte schließlich der elektrische Wirkungsgrad zwischen den Spulen und dem Metallgut bestimmt werden. Aus der Differenz der der ersten Spule und der zweiten Spule bereitgestellten elektrischen Leistung und der in dem Metallgut umgesetzten Leistung konnte zudem die Verlustleistung der Spulen bestimmt werden.

Alternativ kann eine unmittelbare Bestimmung der Temperaturverteilung in der Dickenerstreckung in Versuchen durch in das Metallgut eingelassene Thermoelemente erfolgen.

Wenn für eine Parameterkombination eine Erwärmungshomogenität entlang der Dickenerstreckung des Metallgutes von 10 angegeben ist, dann liegt die Temperaturabweichung entlang der Dickenerstreckung des Metallgutes bei $\leq 1$ Kelvin pro Millimeter. Bei einem Metallgut mit einer Dickenerstreckung von 110 mm liegen beispielsweise die maximale Temperatur und die minimale Temperatur entlang der Dickenerstreckung des Metallgutes maximal 110 Kelvin auseinander.

Es hat sich ferner überraschenderweise gezeigt, dass mit einer Verringerung der Kantenabstände zwar der elektrische Wirkungsgrad zwischen den Spulen und dem Metallgut erhöht werden kann, die Erwärmungshomogenität entlang der Breitenerstreckung des Metallgutes jedoch mit geringer werdendem Kantenabstand wieder abnimmt.

Aus den Versuchsreihen ergab sich, dass ein erster Kantenabstand und/oder ein zweiter Kantenabstand in bestimmten definierten Bereichen besonders vorteilhaft ist. Die Versuchsreihen haben zu den in Tabelle 2 dargestellten Ergebnisse geführt.

Tab. 2: Erster Kantenabstand bzw. Zweiter Kantenabstand, Elektrischer Wirkungsgrad und Erwärmungshomogenität entlang der Breitenerstreckung des Metallgutes (Bewertung jeweils zwischen 0 und 10, wobei 0 die kleinstmögliche Ausprägung und 10 die größtmögliche Ausprägung der jeweiligen Eigenschaft bedeutet.)

| Erster Kantenabstand / Zweiter Kantenabstand | Elektrischer Wirkungsgrad zwischen Spulen und Metallgut | Erwärmungshomogenität entlang der Breitenerstreckung des Metallgutes |
|---|---|---|
| 5d | 0,2 | 10 |
| 4,5d | 0,5 | 10 |
| 4d | 1 | 10 |
| 3, 5d | 2 | 10 |
| 3d | 3 | 10 |
| 2,5d | 5 | 10 |
| 2d | 7 | 10 |
| 1,75d | 7 | 10 |
| 1, 5d | 8 | 10 |
| 1, 25d | 9 | 10 |
| 1d | 9 | 9 |
| 0, 8d | 10 | 7 |
| 0, 5d | 10 | 4 |
| 0, 3d | 10 | 2 |
| 0d | 10 | 1 |

In den Versuchsreihen der in Tabelle 2 zusammengefassten Ergebnisse wurde mittels einer thermografischen Aufnahme mit einer Wärmebildkamera der Oberfläche des Metallgutes, insbesondere der ersten Seite und/oder der zweiten Seite des Metallgutes, die Erwärmungshomogenität entlang der Breitenerstreckung des Metallgutes direkt bestimmt. Der elektrische Wirkungsgrad wurde in analogerweise zu den Versuchsreihen der in Tabelle 1 dargestellten Ergebnisse bestimmt.

Es hat sich weiterhin überraschenderweise gezeigt, dass mit einer Vergrößerung der Polabstände zwar die Erwärmungshomogenität entlang der Breitenerstreckung des Metallgutes steigt, der elektrische Wirkungsgrad zwischen den Spulen und dem Metallgut jedoch wieder abnimmt.

Aus den Versuchsreihen ergab sich, dass ein erster Polabstand und/oder ein zweiter Polabstand in bestimmten definierten Bereichen besonders vorteilhaft ist. Die Versuchsreihen haben zu den in Tabelle 3 dargestellten Ergebnisse geführt.

Tab. 3: Erster Polabstand bzw. zweiter Polabstand, Elektrischer Wirkungsgrad und Erwärmungshomogenität im Kantenbereich (Bewertung jeweils zwischen 0 und 10, wobei 0 die kleinstmögliche Ausprägung und 10 die größtmögliche Ausprägung der jeweiligen Eigenschaft bedeutet.)

| Erster Polabstand / Zweiter Polabstand | Elektrischer Wirkungsgrad zwischen Spulen und Metallgut | Erwärmungshomogenität entlang der Breitenerstreckung des Metallgutes |
|---|---|---|
| 5d | 2 | 10 |
| 4,5d | 5 | 10 |

(fortgesetzt)

| Erster Polabstand / Zweiter Polabstand | Elektrischer Wirkungsgrad zwischen Spulen und Metallgut | Erwärmungshomogenität entlang der Breitenerstreckung des Metallgutes |
|---|---|---|
| 4d | 6 | 10 |
| 3, 8d | 7 | 10 |
| 3,4 | 7 | 10 |
| 3d | 8 | 10 |
| 2,8d | 8 | 10 |
| 2, 6d | 8 | 10 |
| 2, 4d | 9 | 10 |
| 2, 2d | 10 | 10 |
| 2d | 10 | 10 |
| 1, 8d | 10 | 10 |
| 1, 6d | 8 | 8 |
| 1, 4d | 8 | 6 |
| 1, 2d | 7 | 5 |
| 1d | 6 | 2 |
| 0, 5d | 3 | 1 |
| 0d | 0 | 0 |

In den Versuchsreihen der in Tabelle 3 zusammengefassten Ergebnisse wurde mittels einer thermografischen Aufnahme mit einer Wärmebildkamera der Oberfläche des Metallgutes, insbesondere der ersten Seite und/oder der zweiten Seite des Metallgutes, die Erwärmungshomogenität entlang der Breitenerstreckung des Metallgutes direkt bestimmt. Der elektrische Wirkungsgrad wurde in analogerweise zu den Versuchsreihen der in Tabelle 1 dargestellten Ergebnisse bestimmt.

Weitere Vorteile, Einzelheiten und Merkmale der Erfindung ergeben sich nachfolgend aus den erläuterten Ausführungsbeispielen. Dabei zeigen im Einzelnen:

Figur 1:     eine Induktionserwärmungsvorrichtung gemäß einer ersten Ausführungsform in einer perspektivischen Darstellung;

Figur 2:     eine Induktionserwärmungsvorrichtung gemäß einer zweiten Ausführungsform in einer Schnittansicht;

Figur 3:     die Induktionserwärmungsvorrichtung gemäß der zweiten Ausführungsform in einer Draufsicht auf eine Förderebene.

In der nun folgenden Beschreibung bezeichnen gleiche Bezugszeichen gleiche Bauteile bzw. gleiche Merkmale, sodass eine in Bezug auf eine Figur durchgeführte Beschreibung bezüglich eines Bauteils auch für die anderen Figuren gilt, sodass eine wiederholende Beschreibung vermieden wird. Ferner sind einzelne Merkmale, die in Zusammenhang mit einer Ausführungsform beschrieben wurden, auch separat in anderen Ausführungsformen verwendbar.

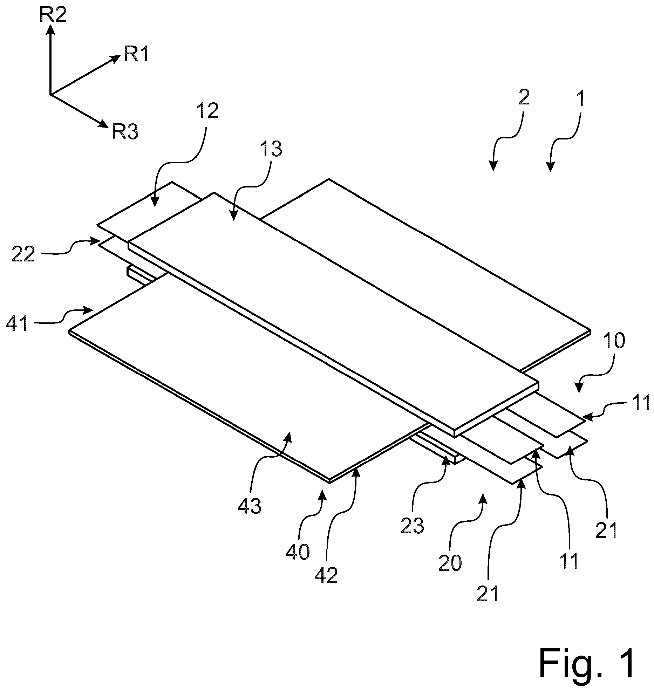

Figur 1 zeigt eine Induktionserwärmungsvorrichtung 1 zur Erwärmung eines in eine Förderrichtung R1 geförderten Metallgutes 40 gemäß einer ersten Ausführungsform in einer perspektivischen Darstellung, wobei die Induktionserwärmungsvorrichtung einen Induktor 2 mit einer ersten Spule 10 und einer zweiten Spule 20 aufweist. Die erste Spule 10 und die zweite Spule 20 sind in einer Abstandsrichtung R2 voneinander beabstandet angeordnet und begrenzen einen Abstandsraum zumindest teilweise, sodass ein in der Förderrichtung R1 gefördertes Metallgut 40 zwischen der ersten Spule 10 und der zweiten Spule 20 durch den Abstandsraum gefördert wird. Die erste Spule 10 weist eine Windung auf, die durch zwei erste über einen ersten Verbindungssteg 12 miteinander verbundene Leiterprofile 11 gebildet wird. Die zweite Spule 20 weist eine Windung auf, die durch zwei zweite über einen zweiten Verbindungssteg 22 miteinander verbundene Leiterprofile 21 gebildet wird. Der erste Verbindungssteg 12 und der zweite Verbindungssteg 22 sind zu einer ersten äußeren Kante 41 des Metallgutes 40 beabstandet angeordnet.

Die erste Spule 10 weist einen ersten Kern 13 auf und die zweite Spule weist einen zweiten Kern 23 auf. Der erste Kern 13 und der zweite Kern 23 erstrecken sich jeweils in Querrichtung R3 über eine zweite äußere Kante 42 des Metallgutes 40 hinaus.

Die erste Spule 10 ist in der Abstandsrichtung R3 zu der ersten Seite 43 des Metallgutes 40 beabstandet angeordnet und die zweite Spule 20 ist in der Abstandsrichtung R3 zu einer in Figur 1 nicht dargestellten zweiten Seite 44 des Metallgutes 40 beabstandet angeordnet.

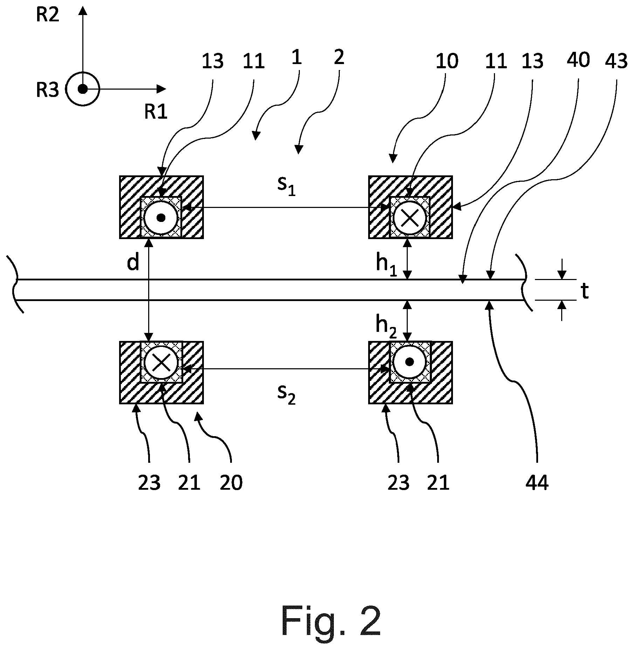

Figur 2 zeigt eine Induktionserwärmungsvorrichtung 1 zur Erwärmung eines in eine Förderrichtung R1 geförderten Metallgutes 40 gemäß einer zweiten Ausführungsform in einer Schnittansicht, wobei die Induktionserwärmungsvorrichtung 1 einen Induktor 2 mit einer ersten Spule 10 und einer zweiten Spule 20 aufweist. Die erste Spule 10 und die zweite Spule 20 sind in einer Abstandsrichtung R2 voneinander beabstandet angeordnet und begrenzen einen Abstandsraum zumindest teilweise, sodass ein in der Förderrichtung R1 gefördertes Metallgut 40 zwischen der ersten Spule 10 und der zweiten Spule 20 zumindest teilweise durch den Abstandsraum gefördert wird. Die Induktionserwärmungsvorrichtung 1 weist ferner eine in Figur 1 nicht dargestellte Energieversorgungseinrichtung, die mit der ersten Spule 10 und der zweiten Spule 20 elektrisch verbunden ist und dazu eingerichtet ist, die erste Spule 10 und die zweite Spule 20 mit Wechselstrom und/oder Wechselspannung zu versorgen, sodass eine Eindringtiefe $\delta$ von stromtragenden Schichten des geförderten Metallgutes 40 kleiner oder gleich 0,7 Mal einer Dickenerstreckung t des geförderten Metallgutes 40 ist.

Die Energieversorgungseinrichtung 30 ist dazu eingerichtet die erste Spule 10 und die zweite Spule 20 mit Wechselstrom zu versorgen, wobei der Wechselstrom der ersten Spule 10 und der zweiten Spule 20 eine Phasenverschiebung von 180 ° zueinander aufweist. Mit anderen Worten erzeugt die in Figur 2 dargestellte Induktionserwärmungsvorrichtung 1 eine Längsfeldinduktion, sodass die in dem Metallgut 40 von der ersten Spule 10 induzierten Ströme entgegen der Richtung der von der zweiten Spule 20 induzierten Ströme verlaufen.

Die erste Spule 10 weist einen ersten Abstand $h_1$ in der Abstandsrichtung R2 zu einer ersten Seite 43 des geförderten Metallgutes 40 und die zweite Spule 20 weist einen zweiten Abstand $h_2$ in der Abstandsrichtung R2 zu einer zweiten Seite 44 des geförderten Metallgutes 40 auf. Die erste Spule 10 und die zweite Spule 20 weisen begrenzen einen Luftspalt d in der Abstandsrichtung R2, durch welchen das geförderte Metallgut 40 hindurch gefördert wird.

Die erste Spule 10 weist zumindest eine Windung auf, die durch zumindest zwei erste über einen in Figur 1 nicht dargestellten ersten Verbindungssteg 12 verbundene Leiterprofile 11 gebildet ist und die zweite Spule 20 weist zumindest eine Windung auf, die durch zumindest zwei zweite über einen in Figur 1 nicht dargestellten zweiten Verbindungssteg 22 verbundene Leiterprofile 21 gebildet ist.

Die zwei ersten Leiterprofile 11 der ersten Spule 10 weisen einen ersten Polabstand $s_1$ zueinander auf und die zwei zweiten Leiterprofile 21 der zweiten Spule 20 weisen einen zweiten Polabstand $s_2$ zueinander auf.

Die erste Spule 10 weist zwei erste Kerne 13 auf, wobei die ersten Kerne 13 jeweils derart angeordnet sind, dass, wenn die erste Spule 10 von einem Wechselstrom durchflossen wird, die ersten Kerne 13 jeweils einen magnetischen Pfad für einen durch den durch die erste Spule fließenden Wechselstrom erzeugten magnetischen Fluss bilden. Die zweite Spule 20 weist zwei zweite Kerne 23 auf, wobei die zweiten Kerne 23 jeweils derart angeordnet sind, dass, wenn die zweite Spule 20 von einem Wechselstrom durchflossen wird, die zweiten Kerne 23 jeweils einen magnetischen Pfad für einen durch den durch die zweite Spule fließenden Wechselstrom erzeugten magnetischen Fluss bilden.

Die ersten Kerne 13 umgeben die ersten Leiterprofile 11 jeweils an drei Seiten. Die der ersten Seite 43 des Metallgutes 40 zugewandte Seite der ersten Leiterprofile 11 ist frei von Material der ersten Kerne 13. Die zweiten Kerne 23 umgeben die zweiten Leiterprofile 21 jeweils an drei Seiten. Die der zweiten Seite 44 des Metallgutes 40 zugewandte Seite der zweiten Leiterprofile 21 ist frei von Material der zweiten Kerne 23.

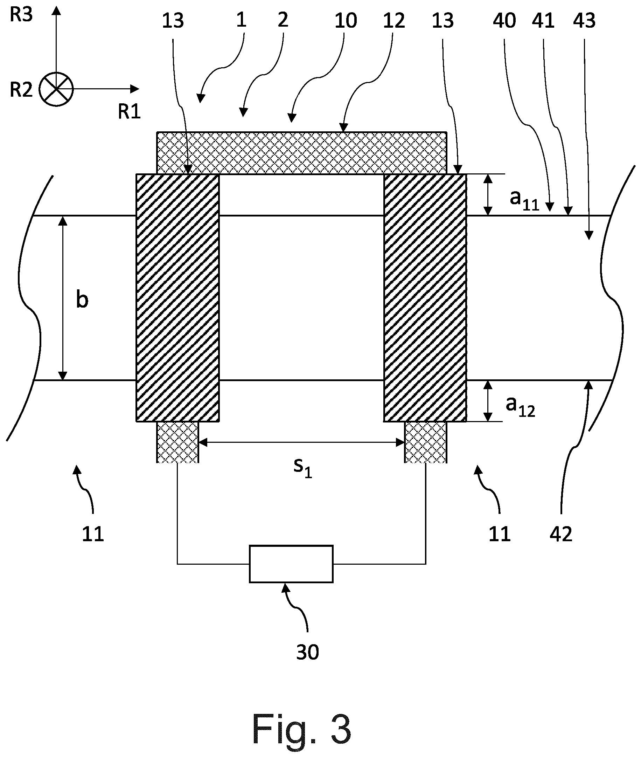

Figur 3 zeigt die Induktionserwärmungsvorrichtung 1 zur Erwärmung eines in eine Förderrichtung R1 geförderten Metallgutes 40 gemäß der zweiten Ausführungsform in einer Draufsicht auf die eine Förderebene.

Die Energieversorgungseinrichtung 30 ist mit der ersten Spule 10 und mit der in Figur 3 nicht dargestellten zweiten Spule 20 elektrisch verbunden.

Die zwei ersten Leiterprofile 11 der ersten Spule 10 sind durch einen ersten Verbindungssteg 12 miteinander verbunden und bilden eine Windung.

Der erste Verbindungssteg 12 weist einen ersten Kantenabstand $a_{11}$ zu einer ersten äußeren Kante 41 des Metallgutes 40 auf.

Die ersten Kerne 13 erstrecken sich jeweils in der Querrichtung R3 entlang der ersten Leiterprofile 11 über einen Längenbereich, der größer als die Breitenerstreckung b des Metallgutes 40 ist. Die ersten Kerne 13 erstrecken sich jeweils in der Querrichtung R3 ausgehend von dem ersten Verbindungssteg 12 entlang der Querrichtung R3 und überragen das Metallgut 40 in der Breitenerstreckung, sodass ein erster Kantenabstand $a_{12}$ zwischen einer zweiten äußeren Kante 42 des Metallgutes 40 und dem Erstreckungsende der ersten Kerne 13 in der Querrichtung R3 gebildet ist.

**Bezugszeichenliste**

| | |
|---|---|
| 1 | Induktionserwärmungsvorrichtung |
| 2 | Induktor |
| 10 | Erste Spule |
| 11 | Erstes Leiterprofil (der ersten Spule) |
| 12 | Erster Verbindungssteg (der ersten Spule) |
| 13 | Erster Kern (der ersten Spule) |
| 20 | Zweite Spule |
| 21 | Zweites Leiterprofil (der zweiten Spule) |
| 22 | Zweiter Verbindungssteg (der zweiten Spule) |
| 23 | Zweiter Kern (der zweiten Spule) |
| 30 | Energieversorgungseinrichtung |
| 40 | Metallgut |
| 41 | Erste äußere Kante (des Metallgutes) |
| 42 | Zweite äußere Kante (des Metallgutes) |
| 43 | Erste Seite (des Metallgutes) |
| 44 | Zweite Seite (des Metallgutes) |
| R1 | Förderrichtung |
| R2 | Abstandsrichtung |
| R3 | Querrichtung |
| d | Luftspalt |
| $h_1$ | Erster Abstand |
| $h_2$ | Zweiter Abstand |
| $a_{11}$ | Erster Kantenabstand (zur ersten äußeren Kante) |
| $a_{12}$ | Erster Kantenabstand (zur zweiten äußeren Kante) |
| $s_1$ | Erster Polabstand |
| $s_2$ | Zweiter Polabstand |
| t | Dickenerstreckung (des Metallgutes) |
| b | Breitenerstreckung (des Metallgutes) |

**Patentansprüche**

1. Induktionserwärmungsvorrichtung (1) zur Erwärmung eines in eine Förderrichtung (R1) geförderten Metallgutes (40), wobei die Induktionserwärmungsvorrichtung (1) aufweist:

- zumindest einen Induktor (2), mit zumindest einer ersten Spule (10) und zumindest einer zweiten Spule (20),
- wobei die erste Spule (10) und die zweite Spule (20) in einer Abstandsrichtung (R2) voneinander beabstandet angeordnet sind und einen Abstandsraum zumindest teilweise begrenzen, sodass ein in der Förderrichtung (R1) gefördertes Metallgut (40) zwischen der ersten Spule (10) und der zweiten Spule (20) zumindest teilweise durch den Abstandsraum gefördert wird,
- zumindest eine Energieversorgungseinrichtung (30), die mit der ersten Spule (10) und der zweiten Spule (20) elektrisch verbunden ist, und
- die Energieversorgungseinrichtung (30) dazu eingerichtet ist, die erste Spule (10) und die zweite Spule (20) mit Wechselstrom und/oder Wechselspannung zu versorgen, sodass eine Eindringtiefe $\delta$ von stromtragenden Schichten des geförderten Metallgutes (40) kleiner oder gleich 0,7 Mal einer Dickenerstreckung (t) des geförderten Metallgutes (40) ist,
**dadurch gekennzeichnet, dass**
- die zumindest zwei ersten Leiterprofile (11) der ersten Spule (10) einen ersten Polabstand ($s_1$) von kleiner oder gleich 4 Mal einer Erstreckung eines Luftspaltes d zueinander aufweisen.

2. Induktionserwärmungsvorrichtung (1) gemäß einem der vorhergehenden Ansprüche, **wobei:**

- die erste Spule (10) einen ersten Abstand ($h_1$) in der Abstandsrichtung (R2) zu einer ersten Seite (43) des geförderten Metallgutes (40) von kleiner oder gleich 150 mm aufweist, und/oder
- die zweite Spule (20) einen zweiten Abstand ($h_2$) in der Abstandsrichtung (R2) zu einer zweiten Seite (44) des geförderten Metallgutes (40) von kleiner oder gleich 150 mm aufweist.

3. Induktionserwärmungsvorrichtung (1) gemäß einem der vorhergehenden Ansprüche, **wobei:**

- die erste Spule (10) zumindest eine Windung aufweist, die durch zumindest zwei erste über einen ersten Verbindungssteg (12) verbundene Leiterprofile (11) gebildet wird, wobei

- der erste Verbindungssteg (12) der ersten Spule (10) einen ersten Kantenabstand ($a_{11}$) zu einer ersten äußeren Kante (41) des geförderten Metallgutes (40) von kleiner oder gleich 5 Mal der Erstreckung eines Luftspaltes d zwischen der ersten Spule (10) und der zweiten Spule (20) aufweist, und/oder

- die zweite Spule (20) zumindest eine Windung aufweist, die durch zumindest zwei zweite über einen zweiten Verbindungssteg (22) verbundene Leiterprofile (21) gebildet wird, wobei

- der zweite Verbindungssteg (22) der zweiten Spule (20) einen zweiten Kantenabstand ($a_{21}$) zu der ersten äußeren Kante (41) des geförderten Metallgutes (40) von kleiner oder gleich 5 Mal der Erstreckung des Luftspaltes d zwischen der ersten Spule (10) und der zweiten Spule (20) aufweist.

4. Induktionserwärmungsvorrichtung (1) gemäß einem der vorhergehenden Ansprüche, **wobei:**

- die zumindest zwei zweiten Leiterprofile (21) der zweiten Spule (20) einen zweiten Polabstand ($s_2$) von kleiner oder gleich 4 Mal der Erstreckung des Luftspaltes d zueinander aufweisen.

5. Induktionserwärmungsvorrichtung (1) gemäß einem der vorhergehenden Ansprüche, **wobei** die Energieversorgungseinrichtung dazu geeignet ist, die erste Spule (10) und die zweite Spule (20) mit Wechselstrom- und/oder Wechselspannungsfrequenzen von kleiner oder gleich 100 kHz zu versorgen.

6. Induktionserwärmungsvorrichtung (1) gemäß einem der vorhergehenden Ansprüche, **wobei**

- die Energieversorgungseinrichtung dazu geeignet ist, die erste Spule (10) und/oder die zweite Spule (20) jeweils mit elektrischer Leistung von zumindest 1000 kW über einen Zeitraum von zumindest einer Minute zu versorgen, und/oder

- die erste Spule (10) und/oder die zweite Spule (20) dazu geeignet ist/sind, jeweils eine elektrische Leistung von zumindest 1000 kW über einen Zeitraum von zumindest einer Minute aufzunehmen.

7. Induktionserwärmungsvorrichtung (1) gemäß einem der vorhergehenden Ansprüche, **wobei** die Induktionserwärmungsvorrichtung () eine Verfahreinrichtung aufweist, die dazu geeignet ist, die zumindest eine erste Spule (10) und/oder die zumindest eine zweite Spule (20) des Induktors (2) in der Abstandsrichtung (R2) und/oder in einer Querrichtung (R3) und/oder in der Förderrichtung (R1) des Metallgutes (40) zu verfahren, insbesondere in eine Arbeitsposition zu verfahren.

8. Induktionserwärmungsvorrichtung (1) gemäß einem der vorhergehenden Ansprüche, **wobei:**

- die erste Spule (10) zumindest einen ersten Kern (13) aufweist, wobei der erste Kern (13) derart angeordnet ist, dass, wenn die erste Spule (10) von einem Wechselstrom durchflossen wird, der erste Kern (13) einen magnetischen Pfad für einen durch den durch die erste Spule (10) fließenden Wechselstrom erzeugten magnetischen Fluss bildet; und/oder

- die zweite Spule (20) zumindest einen zweiten Kern (23) aufweist, wobei der zweite Kern (23) derart angeordnet ist, dass, wenn die zweite Spule (20) von einem Wechselstrom durchflossen wird, der zweite Kern (23) einen magnetischen Pfad für einen durch den durch die zweite Spule (20) fließenden Wechselstrom erzeugten magnetischen Fluss bildet.

9. Induktionserwärmungsvorrichtung (1) gemäß einem der vorhergehenden Ansprüche, **wobei** die Induktionserwärmungsvorrichtung (1) aufweist:

- zumindest eine erste Kondensatoreinrichtung, wobei die erste Kondensatoreinrichtung mit der zumindest einen ersten Spule (10) zu einem ersten Teilschwingkreis verschaltet ist, und/oder wobei die eine erste Kondensatoreinrichtung mit der zumindest einen zweiten Spule (20) zu einem zweiten Teilschwingkreis verschaltet ist, und/oder,

- zumindest eine zweite Kondensatoreinrichtung, wobei die zweite Kondensatoreinrichtung mit der zumindest einen zweiten Spule (20) zu einem zweiten Teilschwingkreis verschaltet ist.

10. Induktionserwärmungsvorrichtung (1) gemäß einem der vorhergehenden Ansprüche, **wobei:**

- die Induktionserwärmungsvorrichtung (1) zumindest einen Anpassungstransformator aufweist,

- wobei der Anpassungstransformator mit seiner Sekundärseite zumindest mittelbar mit der zumindest einen ersten Spule (10) und/oder mit der zumindest einen zweiten Spule (20) elektrisch verbunden ist.

11. Induktionserwärmungsvorrichtung (1) gemäß einem der vorhergehenden Ansprüche, **wobei:**

- die Energieversorgungseinrichtung dazu eingerichtet ist die zumindest eine erste Spule (10) und die zumindest eine zweite Spule (20) mit Wechselstrom zu versorgen, wobei der Wechselstrom der zumindest einen ersten Spule (10) und der Wechselstrom der zumindest einen zweiten Spule (20) die gleiche Phase oder eine Phasenverschiebung zueinander aufweisen können, und
- die Energieversorgungseinrichtung dazu eingerichtet ist die zumindest eine erste Spule (10) und die zumindest eine zweite Spule (20) mit Wechselspannung zu versorgen, wobei die Wechselspannung der zumindest einen ersten Spule (10) und die Wechselspannung der zumindest einen zweiten Spule (20) die gleiche Phase oder eine Phasenverschiebung zueinander aufweisen können.

12. Induktionserwärmungsvorrichtung (1) gemäß einem der vorhergehenden Ansprüche, **wobei:**

- die Induktionserwärmungsvorrichtung (1) eine Mehrzahl von Induktoren (2) aufweist;
- die zumindest eine Energieversorgungseinrichtung mit den ersten Spulen (10) und den zweiten Spulen (20) der Mehrzahl von Induktoren verbunden ist und dazu eingerichtet ist die ersten Spulen (10) und die zweiten Spulen (20) der Mehrzahl von Induktoren (2) mit elektrischer Energie zu versorgen.

13. Induktionserwärmungsvorrichtung (1) gemäß einem der vorhergehenden Ansprüche, **wobei** die Induktionserwärmungsvorrichtung (1) eine Steuerungs- und Regelungseinrichtung aufweist, wobei die Steuerungs- und Regelungseinrichtung dazu eingerichtet ist die Versorgung der ersten Spule (10) und/oder der zweiten Spule (20) mit elektrischer Energie zu steuern und/oder zu regeln.

14. Produktionslinie zur Herstellung und/oder Verarbeitung eines Metallgutes (40) aufweisend eine Induktionserwärmungsvorrichtung (1) gemäß einem der vorhergehenden Ansprüche.

15. Verwendung einer Induktionserwärmungsvorrichtung (1) gemäß einem der Ansprüche 1 bis 13 und/oder einer Produktionslinie gemäß Anspruch 14.

**Claims**

1. Induction heating device (1) for heating a metal material (40) conveyed in a conveying direction (R1), wherein the induction heating device (1) has:

- at least one inductor (2) with at least one first coil (10) and at least one second coil (20),
- wherein the first coil (10) and the second coil (20) are arranged spaced apart from one another in a spacing direction (R2) and at least partially delimit a clearance, so that a metal material (40) conveyed in the conveying direction (R1) is conveyed at least partially through the clearance space between the first coil (10) and the second coil (20),
- at least one energy supply means (30) which is electrically connected to the first coil (10) and the second coil (20), and
- the energy supply means (30) is designed to supply the first coil (10) and the second coil (20) with alternating current and/or alternating voltage, so that a penetration depth $\delta$ of current-carrying layers of the conveyed metal material (40) is less than or equal to 0.7 times a thickness extension (t) of the conveyed metal material (40), **characterized in that**
- the at least two first conductor profiles (11) of the first coil (10) are at a first pole distance ($s_1$) from each other of less than or equal to 4 times an extension of an air gap d.

2. Induction heating device (1) according to one of the preceding claims, **wherein:**

- the first coil (10) is at a first distance ($h_1$) in the spacing direction (R2) from a first side (43) of the conveyed metal material (40) of less than or equal to 150 mm, and/or
- the second coil (20) is at a second distance ($h_2$) in the spacing direction (R2) from a second side (44) of the conveyed metal material (40) of less than or equal to 150 mm.

3. Induction heating device (1) according to one of the preceding claims, **wherein:**

- the first coil (10) has at least one turn which is formed by at least two first conductor profiles (11) connected via a first connecting web (12), wherein
- the first connecting web (12) of the first coil (10) is at a first edge distance ($a_{11}$) from a first outer edge (41) of the conveyed metal material (40) of less than or equal to 5 times the extension of an air gap d between the first coil (10) and the second coil (20), and/or
- the second coil (20) has at least one turn which is formed by at least two second conductor profiles (21) connected via a second connecting web (22), wherein
- the second connecting web (22) of the second coil (20) is at a second edge distance ($a_{21}$) from the first outer edge (41) of the conveyed metal material (40) of less than or equal to 5 times the extension of the air gap d between the first coil (10) and the second coil (20).

4. Induction heating device (1) according to one of the preceding claims, **wherein:**

- the at least two second conductor profiles (21) of the second coil (20) are at a second pole distance ($s_2$) from each other of less than or equal to 4 times the extension of the air gap d.

5. Induction heating device (1) according to one of the preceding claims, **wherein** the energy supply means is suitable for supplying the first coil (10) and the second coil (20) with alternating current and/or alternating voltage frequencies of less than or equal to 100 kHz.

6. Induction heating device (1) according to one of the preceding claims, **wherein**

- the energy supply means is suitable for supplying the first coil (10) and/or the second coil (20) with electrical power of at least 1,000 kW over a period of at least one minute, and/or
- the first coil (10) and/or the second coil (20) is/are suitable for each absorbing an electrical power of at least 1,000 kW over a period of at least one minute.

7. Induction heating device (1) according to one of the preceding claims, **wherein** the induction heating device () has a displacement device which is suitable for displacing the at least one first coil (10) and/or the at least one second coil (20) of the inductor (2) in the spacing direction (R2) and/or in a transverse direction (R3) and/or in the conveying direction (R1) of the metal material (40), in particular for displacing it into a working position.

8. Induction heating device (1) according to one of the preceding claims, **wherein:**

- the first coil (10) has at least one first core (13), wherein the first core (13) is arranged such that, when an alternating current flows through the first coil (10), the first core (13) forms a magnetic path for a magnetic flux generated by the alternating current flowing through the first coil (10); and/or
- the second coil (20) has at least one second core (23), wherein the second core (23) is arranged such that, when an alternating current flows through the second coil (20), the second core (23) forms a magnetic path for a magnetic flux generated by the alternating current flowing through the second coil (20).

9. Induction heating device (1) according to one of the preceding claims, **wherein** the induction heating device (1) has:

- at least one first capacitor device, wherein the first capacitor device is connected to the at least one first coil (10) to form a first partial resonant circuit, and/or wherein the one first capacitor device is connected to the at least one second coil (20) to form a second partial resonant circuit, and/or
- at least one second capacitor device, wherein the second capacitor device is connected to the at least one second coil (20) to form a second partial resonant circuit.

10. Induction heating device (1) according to one of the preceding claims, **wherein:**

- the induction heating device (1) has at least one matching transformer,
- wherein the secondary side of the matching transformer is electrically connected at least indirectly to the at least one first coil (10) and/or to the at least one second coil (20).

11. Induction heating device (1) according to one of the preceding claims, **wherein:**

- the energy supply means is designed to supply the at least one first coil (10) and the at least one second coil (20) with alternating current, wherein the alternating current of the at least one first coil (10) and the alternating current of the at least one second coil (20) can have the same phase or a phase shift with respect to one another, and
- the energy supply means is designed to supply the at least one first coil (10) and the at least one second coil (20) with alternating voltage, wherein the alternating voltage of the at least one first coil (10) and the alternating voltage of the at least one second coil (20) can have the same phase or a phase shift with respect to one another.

12. Induction heating device (1) according to one of the preceding claims, **wherein:**

- the induction heating device (1) has a plurality of inductors (2);
- the at least one energy supply means is connected to the first coils (10) and the second coils (20) of the plurality of inductors and is configured to supply the first coils (10) and the second coils (20) of the plurality of inductors (2) with electrical energy.

13. Induction heating device (1) according to one of the preceding claims, **wherein** the induction heating device (1) has an open-loop and closed-loop control device, wherein the open-loop and closed-loop control device is designed for open-loop and/or closed-loop control of the supply of electrical energy to the first coil (10) and/or the second coil (20).

14. Production line for producing and/or processing a metal material (40), having an induction heating device (1) according to one of the preceding claims.

15. Use of an induction heating device (1) according to one of claims 1 to 13 and/or a production line according to claim 14.

**Revendications**

1. Dispositif de chauffage par induction (1) pour le chauffage d'un produit métallique (40) transporté dans une direction de transport (R1), dans lequel le dispositif de chauffage par induction (1) présente :

   - au moins un inducteur (2), comportant au moins une première bobine (10) et au moins une seconde bobine (20),
   - dans lequel la première bobine (10) et la seconde bobine (20) sont disposées à l'écart l'une de l'autre dans une direction d'écartement (R2) et délimitent au moins partiellement un espace d'écartement, de sorte qu'un produit métallique (40) transporté dans la direction de transport (R1) est transporté au moins partiellement à travers l'espace d'écartement entre la première bobine (10) et la seconde bobine (20),
   - au moins un appareil d'alimentation en énergie (30) connecté électriquement à la première bobine (10) et à la seconde bobine (20) ; et
   - l'appareil d'alimentation en énergie (30) est configuré pour alimenter la première bobine (10) et la seconde bobine (20) en courant alternatif et/ou en tension alternative, de sorte qu'une profondeur de pénétration $\delta$ de couches porteuses de courant du produit métallique (40) transporté est inférieure ou égale à 0,7 fois une extension d'épaisseur (t) du produit métallique (40) transporté,
   **caractérisé en ce que**
   - les au moins deux premiers profilés conducteurs (11) de la première bobine (10) présentent un premier écartement polaire ($s_1$) inférieur ou égal à 4 fois une extension d'un entrefer d l'un par rapport à l'autre.

2. Dispositif de chauffage par induction (1) selon l'une des revendications précédentes, dans lequel :

   - la première bobine (10) présente un premier écartement ($h_1$), par rapport à un premier côté (43) du produit métallique (40) transporté, inférieur ou égal à 150 mm dans la direction d'écartement (R2), et/ou
   - la seconde bobine (20) présente un second écartement ($h_2$), par rapport à un second côté (44) du produit métallique (40) transporté, inférieur ou égal à 150 mm dans la direction d'écartement (R2).

3. Dispositif de chauffage par induction (1) selon l'une des revendications précédentes, dans lequel :

   - la première bobine (10) présente au moins une spire formée par au moins deux premiers profilés conducteurs (11) connectés par l'intermédiaire d'une première barrette de connexion (12), dans lequel
   - la première barrette de connexion (12) de la première bobine (10) présente un premier écartement de bord ($a_{11}$), par rapport à un premier bord extérieur (41) du produit métallique (40) transporté, inférieur ou égal à 5 fois l'extension d'un entrefer d entre la première bobine (10) et la seconde bobine (20), et/ou

- la seconde bobine (20) présente au moins une spire formée par au moins deux seconds profilés conducteurs (21) connectés par l'intermédiaire d'une seconde barrette de connexion (22), dans lequel
- la seconde barrette de connexion (22) de la seconde bobine (20) présente un second écartement de bord ($a_{21}$), par rapport au premier bord extérieur (41) du produit métallique (40) transporté, inférieur ou égal à 5 fois l'extension de l'entrefer d entre la première bobine (10) et la seconde bobine (20).

4. Dispositif de chauffage par induction (1) selon l'une des revendications précédentes, dans lequel :

- les au moins deux seconds profilés conducteurs (21) de la seconde bobine (20) présentent un second écartement polaire ($s_2$) inférieur ou égal à 4 fois l'extension de l'entrefer d l'un par rapport à l'autre.

5. Dispositif de chauffage par induction (1) selon l'une des revendications précédentes, dans lequel l'appareil d'alimentation en énergie est apte à alimenter la première bobine (10) et la seconde bobine (20) en fréquences de courant alternatif et/ou en tension alternative inférieures ou égales à 100 kHz.

6. Dispositif de chauffage par induction (1) selon l'une des revendications précédentes, dans lequel

- l'appareil d'alimentation en énergie est apte à alimenter la première bobine (10) et/ou la seconde bobine (20) respectivement en puissance électrique d'au moins 1000 kW sur une période d'au moins une minute, et/ou
- la première bobine (10) et/ou la seconde bobine (20) sont aptes à recevoir respectivement une puissance électrique d'au moins 1000 kW sur une période d'au moins une minute.

7. Dispositif de chauffage par induction (1) selon l'une des revendications précédentes, dans lequel le dispositif de chauffage par induction (1) présente un appareil de déplacement apte à déplacer l'au moins une première bobine (10) et/ou l'au moins une seconde bobine (20) de l'inducteur (2) dans la direction d'écartement (R2) et/ou dans une direction transversale (R3) et/ou dans la direction de transport (R1) du produit métallique (40), en particulier à les déplacer dans une position de travail.

8. Dispositif de chauffage par induction (1) selon l'une des revendications précédentes, dans lequel :

- la première bobine (10) présente au moins un premier noyau (13), dans lequel le premier noyau (13) est disposé de telle sorte que, lorsque la première bobine (10) est traversée par un courant alternatif, le premier noyau (13) forme un chemin magnétique pour un flux magnétique généré par le courant alternatif circulant à travers la première bobine (10) ; et/ou
- la seconde bobine (20) présente au moins un second noyau (23), dans lequel le second noyau (23) est disposé de telle sorte que, lorsque la seconde bobine (20) est traversée par un courant alternatif, le second noyau (23) forme un chemin magnétique pour un flux magnétique généré par le courant alternatif circulant à travers la seconde bobine (20).

9. Dispositif de chauffage par induction (1) selon l'une des revendications précédentes, dans lequel le dispositif de chauffage par induction (1) présente :

- au moins un premier appareil formant condensateur, dans lequel le premier appareil formant condensateur est connecté à l'au moins une première bobine (10) pour former un premier circuit oscillant partiel, et/ou dans lequel ledit un premier appareil formant condensateur est connecté à l'au moins une seconde bobine (20) pour former un second circuit oscillant partiel, et/ou,
- au moins un second appareil formant condensateur, dans lequel le second appareil formant condensateur est connecté à l'au moins une seconde bobine (20) pour former un second circuit oscillant partiel.

10. Dispositif de chauffage par induction (1) selon l'une des revendications précédentes, dans lequel :

- le dispositif de chauffage par induction (1) présente au moins un transformateur d'adaptation,
- dans lequel le transformateur d'adaptation est connecté électriquement, par son côté secondaire, au moins indirectement à l'au moins une première bobine (10) et/ou à l'au moins une seconde bobine (20).

11. Dispositif de chauffage par induction (1) selon l'une des revendications précédentes, dans lequel :

- l'appareil d'alimentation en énergie est configuré pour alimenter l'au moins une première bobine (10) et l'au moins une seconde bobine (20) en courant alternatif, dans lequel le courant alternatif de l'au moins une première bobine (10) et le courant alternatif de l'au moins une seconde bobine (20) peuvent présenter la même phase ou un déphasage l'un par rapport à l'autre, et

- l'appareil d'alimentation en énergie est configuré pour alimenter l'au moins une première bobine (10) et l'au moins une seconde bobine (20) en tension alternative, dans lequel la tension alternative de l'au moins une première bobine (10) et la tension alternative de l'au moins une seconde bobine (20) peuvent présenter la même phase ou un déphasage l'une par rapport à l'autre.

12. Dispositif de chauffage par induction (1) selon l'une des revendications précédentes, dans lequel :

- le dispositif de chauffage par induction (1) présente une pluralité d'inducteurs (2) ;
- l'au moins un appareil d'alimentation en énergie est connecté aux premières bobines (10) et aux secondes bobines (20) de la pluralité d'inducteurs et est configuré pour alimenter les premières bobines (10) et les secondes bobines (20) de la pluralité d'inducteurs (2) en énergie électrique.

13. Dispositif de chauffage par induction (1) selon l'une des revendications précédentes, dans lequel le dispositif de chauffage par induction (1) présente un appareil de commande et de régulation, dans lequel l'appareil de commande et de régulation est configuré pour commander et/ou réguler l'alimentation de la première bobine (10) et/ou de la seconde bobine (20) en énergie électrique.

14. Ligne de production pour la fabrication et/ou le traitement d'un produit métallique (40) présentant un dispositif de chauffage par induction (1) selon l'une des revendications précédentes.

15. Utilisation d'un dispositif de chauffage par induction (1) selon l'une des revendications 1 à 13 et/ou d'une ligne de production selon la revendication 14.

R2

R1

R3

12

13

2    1

22

41

10

11

43

23

40    42

20    21    11

21

Fig. 1

Fig. 2

Fig. 3

**EP 4 635 256 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2019029080 A1